# EUROPEAN PATENT SPECIFICATION

(11) **EP 3 344 705 B1**
(45) Date of publication and mention of the grant of the patent: **26.06.2019**
(21) Application number: 16770892.4
(22) Date of filing: 31.08.2016
(51) Int. Cl.: C08L 83/10, C09D 183/10, C08G 77/14, C08G 77/38, C08G 77/42, C08G 77/445, C09J 183/10, C08L 83/06

(54) **COPOLYMERS CONTAINING POLYSILOXANE MACROMONOMER UNITS, PROCESS OF THEIR PREPARATION AND THEIR USE IN COATING COMPOSITIONS AND POLYMERIC MOULDING COMPOUNDS**
COPOLYMEREN MIT POLYSILOXAN ENTHALTENDEN MAKROMONOMEREN, VERFAHREN ZU DEREN HERSTELLUNG UND DEREN VERWENDUNG IN BESCHICHTUNGSZUSAMMENSETZUNGENN UND KUNSTSTOFF-FORMMASSE
COPOLYMÈRES COMPRENANT DES SEGMENTS D'UN MACROMONOMÈRE POLYSILOXANE, PROCÉDÉ DE LEURS PRÉPARATIONS ET ULEURS UTILISATIONS POUR LA PRÉPARATION DE COMPOSITIONS DE REVÊTEMENTS ET COMPOSÉS POLYMÉRIQUES MOULÉS.

(30) Priority: 31.08.2015 EP 15183207
(43) Date of publication of application: 11.07.2018
(73) Proprietor: BYK-Chemie GmbH, 46483 Wesel (DE)
(72) Inventor: JAUNKY, Wojciech, 46485 Wesel (DE); FRANK, Albert, 46509 Xanten (DE); WINTERMEYER, Verena, 46483 Wesel (DE); MICHELBRINK, Michaela, 46483 Wesel (DE)
(74) Representative: Altana IP Department
(86) International application number: PCT/EP2016/070528
(87) International publication number: WO 2017/037123

(56) References cited:
- WO-A1-2012/091742
- US-A- 5 039 761
- DATABASE COMPENDEX [Online] ENGINEERING INFORMATION, INC., NEW YORK, NY, US; 14 November 2002 (2002-11-14), LEE Y ET AL: "Syntheses of poly(methyl methacrylate)/poly(dimethyl siloxane) graft copolymers and their surface enrichment of their blend with acrylate adhesive copolymers", XP002750624, Database accession no. E2002407120333 & LEE Y ET AL: "Syntheses of poly(methyl methacrylate)/poly(dimethyl siloxane) graft copolymers and their surface enrichment of their blend with acrylate adhesive copolymers", JOURNAL OF APPLIED POLYMER SCIENCE 20021114 JOHN WILEY AND SONS INC. US, vol. 86, no. 7, 14 November 2002 (2002-11-14), pages 1736-1740, DOI: 10.1002/APP.11084

## Description

The invention relates to copolymers obtainable from polysiloxane containing macromonomers, and a process for preparation thereof. The invention further relates to the use of the copolymers as additives in compositions such as coating compositions and polymeric moulding compounds as well as such compositions containing at least one inventive copolymer.

### State of the art

It is known to add additives to coatings and polymeric moulding compounds in order to achieve certain qualities, for example improved levelling, slip, mar and scratch resistance, or easy-to-clean properties for furniture varnishes and vehicle finishes. The use of poly(meth)acrylate and/or polysiloxane additives in general is widespread and very diverse.

EP 1 193 303 A2 describes the use of branched copolymers in compositions having anti-adhesion and dirt repellency properties. These branched copolymers comprise polysiloxane side chains, i.e. are polysiloxane graft copolymers, wherein the polysiloxane content of the copolymers described therein is from 5 to 25% by weight of the total weight of the branched polymer.

In the Journal of Applied Polymer Science, 2002, 86(7), pages 1736-1740, different types of poly(methyl methacrylate)/poly(dimethylsiloxane) graft copolymers (PMMA-g-PDMS) were synthesized using poly(dimethylsiloxane) macromonomers. The polysiloxane content in the PMMA-graft-PDMS copolymers disclosed therein represent more than 90 wt.-% of the total weight of the copolymer.

WO-A-2012/091742 describes
low adhesion backsize compositions used for the preparation of silicone adhesive articles comprising a copolymer obtained by copolymerizing a silicone macromer with crystalline (meth)acrylate monomers wherein the silicone macromer is a terminally functionalised vinyl-functional silicone macromer. The copolymer further comprises at least one polar monomer, such as acrylonitrile, methyl acrylate, and acrylic acid, which is copolymerized with the silicone macromer and the crystalline (meth)acrylate. The resulting copolymers comprise 36 wt.% of polysiloxane macromonomer and 64 wt.% of comonomers.

US-A-5 039 761 discloses methacrylic functional dimethylpolysiloxanes comprising a methacrylate group attached to the polysiloxane chain and being copolymerised with methacrylate comonomers to obtain a copolymer having a polyacrylate backbone with polysiloxane side chains having a branched structure attached to the backbone. The copolymers have an average molecular weight of about 10,000 and a content of polysiloxane macromonomer of 1-50 wt.%.

### Problem

The polysiloxane graft copolymers of the prior art do, however, not provide sufficient easy-to-clean and slip properties, in particular not over a sufficiently long period of time.

It was therefore an object of the present invention to provide additives and processes for the preparation thereof, which solve the before-mentioned drawbacks of the prior art products. In particular, it was an object of the present invention to provide polysiloxane graft copolymers that can be used as additives in compositions such as coating compositions and polymeric moulding compounds or in thermoplastics with long-lasting easy-to-clean and slip properties, making it possible to generate surfaces that are less prone to scratches and that are easier to clean and also upon a longer period of time even if the additives have been depleted from the surfaces by mechanical removal or cleaning.

### Solution

This object has been solved by the subject-matter of the claims of the present application as well as by the preferred embodiments thereof disclosed in this specification, i.e. by the subject matter described herein.

A first subject-matter of the present invention is thus a (meth)acrylic copolymer having a weight average molecular weight in the range of from 2,000 to 200,000 and comprising a backbone and polysiloxane containing side chains attached to said backbone,
wherein the polysiloxane portions of the polysiloxane containing side chains attached to the backbone represent from >25.0 to 75.0 wt.-%, based on the total weight of the copolymer and
wherein the polysiloxane containing side chains attached to the backbone of the copolymer independently of another are represented by the part structure (P) 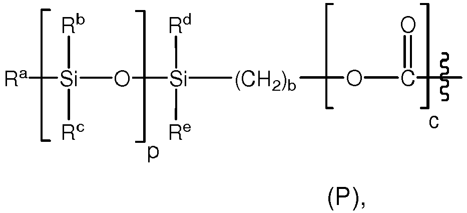 wherein
   the symbol 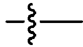 denotes a covalent bond of part structure (P) to the backbone of the inventive copolymer,
   parameter p is in the range of from 1 to 200,
   parameter b is in the range of from 2 to 30,
   parameter c is 0 or 1,
   R^{a}, R^{b}, R^{c}, R^{d} and R^{e} independently of one another represent a linear, saturated, halogenated or non-halogenated alkyl group with 1 to 30 carbon atoms, a branched, saturated, halogenated or non-halogenated alkyl group with 3 to 30 carbon atoms, an aryl group with 6 to 30 carbon atoms, an alkylaryl group or arylalkyl group, in each case with 7 to 30 carbon atoms, or an alkoxyalkyleneoxide residue or an alkoxypolyalkyleneoxide residue.

A further subject-matter of the present invention is a (meth)acrylic copolymer having a weight average molecular weight in the range of from 2,000 to 200,000 and comprising a backbone and polysiloxane containing side chains attached to said backbone, wherein the polysiloxane portions of the polysiloxane containing side chains attached to the backbone represent from >25.0 to 75.0 wt.-%, based on the total weight of the copolymer.

A second subject-matter of the present invention is a process for the preparation of the inventive copolymers. The inventive copolymer can be prepared by copolymerizing suitable monomers. In particular, said process involves a step, wherein at least one polysiloxane containing macromonomer, which contains precisely one ethylenically unsaturated group (monomer (a)), at least one methacrylic ester of a linear C₁-C₂₂-alkyl monoalcohol or of a branched or cyclic C₃-C₂₂-(cyclo)alkyl mono-alcohol (monomer (b)), at least one acrylic ester of a linear C₁-C₂₂-alkyl monoalcohol or of a branched or cyclic C₃-C₂₂-(cyclo)alkyl monoalcohol (monomer (c)), and optionally at least one further monomer having at least one ethylenically unsaturated group, which is different from each of monomers (a), (b) and (c) (monomer (d), are copolymerized to form the copolymer.

A third subject-matter of the present invention is a composition comprising at least one inventive copolymer in an additive amount. Said composition preferably contains said at least one inventive copolymer in an amount of from 0.1 to 20 wt.-%, based on the total weight of the composition. Preferably, the composition is a coating composition, a thermoplastic, or a moulding compound.

A fourth subject-matter of the present invention is a use of the inventive copolymers as additives in a composition. Preferably, said composition contains said at least one inventive copolymer in an amount of from 0.1 to 20 wt.-%, based on the total weight of the composition.

It has been surprisingly found that the inventive copolymers are effective for imparting slip and anti-scratch properties, in particular when incorporated in relatively small amounts, i.e. in additive amounts, in thermoplastics, moulding compounds or coating compositions.

Additionally, it has been in particular surprisingly found that the inventive copolymers, in particular when incorporated into compositions such as thermoplastics, coating compositions or moulding compounds can effectively be used as additives which provide long-lasting easy-to-clean and slip properties, making it possible to generate surfaces that are less prone to scratches and that are easier to clean and also upon a longer period of time even if the additives have been depleted from the surfaces by mechanical removal or cleaning.

Surprisingly, it has been found that these advantageous properties, which are achieved with the inventive copolymer, depend on the specific amount of the polysiloxane portions of the polysiloxane containing side chains attached to the backbone of the copolymer, i.e. result from the specific amount of said polysiloxane portions being the range of from >25.0 to 75.0 wt.-%, based on the total weight of the copolymer. It has been surprisingly found that by using a lower amount or higher amount, the aforementioned advantageous properties surprisingly cannot be achieved.

Surprisingly, it has been further found that the inventive copolymers can be prepared simply by a one-step copolymerization process starting from readily available starting material.

### Detailed description of the invention

### Copolymer

Herein the (meth)acrylic copolymer according to the present invention is also called a "copolymer according to the (present) invention" or an "inventive copolymer". The inventive copolymer is preferably a comb copolymer.

The term "(meth)acrylic" means "acrylic" and/or "methacrylic". Similarly, "(meth)acrylate" means acrylates and/or methacrylates. Therefore, a "(meth)acrylic polymer" in general may be formed from only "acrylic monomers", only "methacrylic monomers" or "acrylic and methacrylic monomers". However, polymerizable monomers other than acrylic and/or methacrylic monomers as e.g. styrene and the like may also be contained in a "(meth)acrylic copolymer". In other words a (meth)acrylic polymer may consist of only acrylic and/or methacrylic monomer units but does not have to. The notation "(meth)acrylate polymer or copolymer" or "(meth)acrylic polymer or copolymer" is intended to mean that the polymer/copolymer (polymer skeleton/backbone) is formed predominantly, i.e. preferably more than 50% or more than 75% of the monomer units used, from monomers having a (meth)acrylic group. In the preparation of a (meth)acrylic copolymer, preferably more than 50% or 75% of the monomers thus have a (meth)acrylic group. However, the use of further monomers as comonomers for its preparation is not excluded.

The inventive (meth)acrylic copolymer has a weight average molecular weight in the range of from 2,000 to 200,000, preferably of from 2,500 to 150,000, more preferably of from 3,000 to 100,000, even more preferably of from 3,500 to 75,000, still more preferably of from 4,000 to 50,000, yet more preferably of from 4,250 to 25,000, in particular of from 4,500 to 15,000, most preferably of from 5,000 to 10,000. In another preferred embodiment, the inventive (meth)acrylic copolymer has a weight average molecular weight in the range of from 3,000 to 175,000, more preferably of from 4,000 to 150,000, even more preferably of from 5,000 to 125,000, still more preferably of from 5,000 to 100,000 or of from 6,000 to 100,000, yet more preferably of from 7,000 to 75,000, in particular of from 8,000 to 60,000, most preferably of from 10,000 to 50,000. The weight average molecular weight of the inventive copolymers is determined according to the method described hereinafter ("Test methods"), i.e. is determined via GPC using polystyrene standards and THF as eluent.

An appropriate weight average molecular weight of the inventive copolymer as defined above improves the handling and compatibility of the copolymers, particularly for use as an additive which can then be used in particular as a liquid additive. In case the weight average molecular weight of the copolymer is below 2,000 or exceeds 200,000 then only inferior slip properties and/or easy-to-clean properties are observed upon its incorporation into compositions such as coating compositions.

The polysiloxane containing side chains are attached to the copolymer backbone via covalent bonds.

Preferably, the backbone of the inventive copolymer is a (meth)acrylic backbone.

The polysiloxane containing side chains attached to the backbone of the inventive copolymer preferably have a number average molecular weight in the range of from 1,200 to 175,000 or of from 1,200 to 100,000, more preferably of from 1,400 to 150,000 or of from 1,400 to 75,000, even more preferably of from 1,600 to 125,000 or of from 1,600 to 50,000, still more preferably of from 1,800 to 100,000 or of from 1,800 to 25,000, yet more preferably of from 2,000 to 75,000 or of from 2,000 to 50,000, in particular of from 2,000 to 60,000 or of from 1,000 to 25,000 or of from 2,000 to 25,000 .

The number average molecular weight of the polysiloxane containing side chains attached to the preferably (meth)acrylic backbone of the inventive copolymer is determined according to the method described hereinafter ("Test methods"), i.e. is determined via GPC using polydimethylsiloxane standards and toluene as eluent. The number average molecular weight of the one or more side chains corresponds e.g. to the number average molecular weight of a suitable polysiloxane containing macromonomer minus its polymerizable group, which is used to form the preferably (meth)acrylic backbone.

The polysiloxane portions of the polysiloxane containing side chains attached to the backbone represent from >25.0 to 75.0 wt.-%, based on the total weight of the copolymer, preferably from 27.5 to 75.0 wt.-%, more preferably from 28.5 to 75.0 wt.-%, even more preferably from 30.0 to 75.0 wt.-%, still more preferably from 30.0 to 70.0 wt.-%, yet more preferably from 35.0 to 70.0 wt.-%, in particular from 40.0 to 70.0 wt.-%, most preferably from 45.0 to 70 wt.-%, in each case based on the total weight of the copolymer.

The polysiloxane containing side chains attached to the preferably (meth)acrylic backbone can be side chains of identical length or mixtures of polysiloxane containing side chains differing in length. The term "polysiloxane containing side chains" preferably means that the side chains contain at least one preferably covalently attached polysiloxane moiety.

The polysiloxane containing side chains attached to the preferably (meth)acrylic backbone of the inventive copolymer independently of another are preferably represented by the part structure (P) 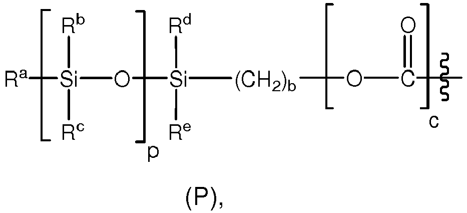 wherein
the symbol 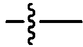 denotes a covalent bond of part structure (P) to the preferably (meth)acrylic backbone of the inventive copolymer,
parameter p is in the range of from 1 to 200,
parameter b is in the range of from 2 to 30,
parameter c is 0 or 1, preferably 1,
R^{a}, R^{b}, R^{c}, R^{d} and R^{e} independently of one another represent
   a linear, saturated, halogenated or non-halogenated alkyl group with 1 to 30 carbon atoms, more preferably with 1 to 20 carbon atoms, even more preferably with 1 to 10 carbon atoms, still more preferably, with 1 to 8 carbon atoms, in particular with 1 to 4 carbon atoms, most preferably with 1 to 2 carbon atoms or with 1 carbon atom only,
   a branched, saturated, halogenated or non-halogenated alkyl group with 3 to 30 carbon atoms, more preferably with 3 to 20 carbon atoms, even more preferably with 3 to 10 carbon atoms, still more preferably, with 3 to 6 carbon atoms,
   an aryl group with 6 to 30 carbon atoms, preferably with 6 to 15 carbon atoms, an alkylaryl group or arylalkyl group, in each case with 7 to 30 carbon atoms, preferably with 7 to 20 carbon atoms, or
   an alkoxyalkyleneoxide residue or an alkoxypolyalkyleneoxide residue, wherein the alkylene unit is in each case preferably a C₂-C₄, more preferably an C₂- and/or C₃- alkylene unit, such as e.g. -(CH₂)₃-O-[(CH₂)₂₋₃-O]ᵥ-CH₃, wherein v is 1 to 10,
   wherein R^{d} may additionally represent -[O-Si(R^{b})(R^{c})]_{q}R^{a}, wherein R^{a}, R^{b} and R^{c} have independently of one another the above defined meanings, and parameter q is in the range of from 1 to 200,
   wherein R^{e} may additionally represent -[O-Si(R^{b})(R^{c})]ₒR^{a}, wherein R^{a}, R^{b} and R^{c} have independently of one another the above defined meanings, and parameter o is in the range of from 1 to 200.

Preferably,
Z denotes H or C₁₋₄-alkyl, such as H or methyl,
parameter p is in the range of from 1 to 200,
parameter b is in the range of from 2 to 10,
parameter c is 0 or 1,
R^{a} represents
a linear, saturated, halogenated or non-halogenated alkyl group with 1 to 30 carbon atoms, more preferably with 1 to 20 carbon atoms, even more preferably with 1 to 10 carbon atoms, still more preferably, with 1 to 8 carbon atoms, in particular with 1 to 4 carbon atoms, most preferably with 1 to 2 carbon atoms or with 1 carbon atom only,
a branched, saturated, halogenated or non-halogenated alkyl group with 3 to 30 carbon atoms, more preferably with 3 to 20 carbon atoms, even more preferably with 3 to 10 carbon atoms, still more preferably, with 3 to 6 carbon atoms,
an aryl group with 6 to 30 carbon atoms, preferably with 6 to 15 carbon atoms,
an alkylaryl group or arylalkyl group, in each case with 7 to 30 carbon atoms, preferably with 7 to 20 carbon atoms, or
an alkoxyalkyleneoxide residue or an alkoxypolyalkyleneoxide residue, wherein the alkylene unit is in each case preferably a C₂-C₄, more preferably an C₂- and/or C₃-alkylene unit, such as e.g. -(CH₂)₃-O-[(CH₂)₂₋₃-O]ᵥ-CH₃, wherein v is 1 to 10,
and
R^{b}, R^{c}, R^{d} and R^{e} independently of one another represent a linear, saturated, halogenated or non-halogenated alkyl group with 1 to 30 carbon atoms, more preferably with 1 to 20 carbon atoms, even more preferably with 1 to 10 carbon atoms, still more preferably, with 1 to 8 carbon atoms, in particular with 1 to 4 carbon atoms, most preferably with 1 to 2 carbon atoms or with 1 carbon atom only,
a branched, saturated, halogenated or non-halogenated alkyl group with 3 to 30 carbon atoms, more preferably with 3 to 20 carbon atoms, even more preferably with 3 to 10 carbon atoms, still more preferably, with 3 to 6 carbon atoms,
an aryl group with 6 to 30 carbon atoms, preferably with 6 to 15 carbon atoms,
an alkylaryl group or arylalkyl group, in each case with 7 to 30 carbon atoms, preferably with 7 to 20 carbon atoms,
and wherein
R^{d} may additionally represent -[O-Si(R^{b})(R^{c})]_{q}R^{a}, wherein R^{a}, R^{b} and R^{c} have independently of one another the above defined meanings, and parameter q is in the range of from 1 to 200, and
R^{e} may additionally represent -[O-Si(R^{b})(R^{c})]ₒR^{a}, wherein R^{a}, R^{b} and R^{c} have independently of one another the above defined meanings, and parameter o is in the range of from 1 to 200.

The polysiloxane portions of the polysiloxane containing side chains attached to the backbone of the inventive copolymer are preferably represented by part structure (Q) 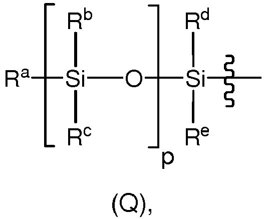 wherein the symbol 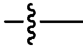 denotes a covalent bond of part structure (Q) to the preferably (meth)acrylic backbone of the inventive copolymer, optionally via a spacer situated between the part structure (Q) and said preferably (meth)acrylic backbone such as a spacer represented by the structure -(CH₂)_{b}-(O-C(=O))_{c}- or represented by the structure -(CH₂)_{b}-,
and wherein R^{a}, R^{b}, R^{c}, R^{d}, R^{e}, p, b and c as well as q and o have the meanings as defined above in connection with part structure (P) and the preferred embodiments thereof.

The inventive copolymers are obtainable by the process for its preparation as outlined hereinafter, i.e. by the "macromonomer method".

### Preparation of the inventive copolymers and process for their preparation

The "macromonomer method" encompasses a copolymerization step, wherein at least one inventively used polysiloxane containing macromonomer, which contains precisely one ethylenically unsaturated group (monomer (a)), is copolymerized with at least one further monomer as comonomer, which contains at least one ethylenically unsaturated group, wherein at least one of the precisely one ethylenically unsaturated group of the polysiloxane containing macromonomer and of the at least one ethylenically unsaturated groups of the comonomer is a (meth)acrylic group.

Preferably, the copolymerization is a radical copolymerization, in particular a free-radical addition polymerization, in each case in a manner known to those skilled in the art. Said free-radical polymerization preferably takes place by means of peroxides or azo compounds as free-radical initiators in organic solvents or in bulk. Suitable solvents include esters, such as ethyl acetate, n-butyl acetate or 1-methoxy-2-propyl acetate, for example, and aromatic solvents, such as toluene or xylene, for example, or else ketones, such as methyl isobutyl ketone or methyl ethyl ketone, for example. The choice of solvent is guided by the later intended use of the copolymer. It is preferred to use low-boiling solvents at atmospheric pressure in order to facilitate the distillative removal of the solvents in the case of applications in which the copolymers are to be used as a 100% product, for example in UV-curing coating compositions. Suitable initiators include peroxides, such as tert-butyl peroxobenzoate or dibenzoyl peroxide, for example. It is also possible, however, to use azo compounds, such as azoisobutyronitrile (AIBN), for example. Peroxides are preferably used.

The radical addition polymerization is preferably conducted at temperatures from 40° C to 180° C, more preferably from 100° C to 150° C, with particular preference from 110° C to 130° C. The radical polymerization can be performed as a continuous or batchwise process. The radical polymerization can be performed, for example, as a bulk polymerization, as a solution polymerization, as a precipitation polymerization, as an emulsion polymerization or as a suspension polymerization. The radical polymerization can be performed as an uncontrolled free-radical polymerization or as a controlled free-radical polymerization. Methods of controlled free-radical polymerization make it possible to achieve better-defined polymer architectures having a narrower molecular weight distribution. It is possible to use the methods known to those skilled in the art for controlled free-radical polymerization, for example ATRP (atom transfer radical polymerization), GTP (group transfer polymerization), NMP (nitroxide mediated polymerization), RAFT (reversible addition fragmentation chain transfer process) or MADIX (macromolecular design via the interchange of xanthates). Controlled polymerization processes include, in particular, the "reversible addition fragmentation chain transfer process" (RAFT), which, in the case of use of particular polymerization regulators, is also referred to as "MADIX" (macromolecular design via the interchange of xanthates) and "addition fragmentation chain transfer". RAFT is described, for example, in Polym. Int. 2000, 49, 993, Aust. J. Chem 2005, 58, 379, J. Polym. Sci. Part A: Polym. Chem. 2005, 43, 5347, Chem. Lett. 1993, 22, 1089, J. Polym. Sci., Part A 1989, 27, 1741 and 1991, 29, 1053 and 1993, 31, 1551 and 1994, 32, 2745 and 1996, 34, 95 and 2003, 41, 645 and 2004, 42, 597 and 2004, 42, 6021, and also in Macromol. Rapid Commun. 2003, 24, 197 and in U.S. Pat. No. 6,291,620, WO 98/01478, WO 98/58974 and WO 99/31144. A further process for controlled polymerization makes use of nitroxyl compounds as polymerization regulators (NMP) and is disclosed, for example, in Chem. Rev. 2001, 101, 3661. Another controlled polymerization process is "group transfer polymerization" (GTP), as disclosed, for example, by O. W. Webster in "Group Transfer Polymerization", in "Encyclopedia of Polymer Science and Engineering", Volume 7, H. F. Mark, N. M. Bikales, C. G. Overberger and G. Menges, Eds., Wiley Interscience, New York 1987, page 580 ff., and in O. W. Webster, Adv. Polym. Sci. 2004, 167, 1-34. Controlled free-radical polymerization using tetraphenylethane, as described, for example, in Macromol. Symp. 1996, 111, 63, is a further example of controlled polymerization. Controlled free-radical polymerization using 1,1-diphenylethene as polymerization regulator is described, for example, in Macromolecular Rapid Communications 2001, 22, 700. Controlled free-radical polymerization using iniferters is disclosed, for example, in Makromol. Chem. Rapid. Commun. 1982, 3, 127. Controlled free-radical polymerization using organocobalt complexes is known, for example, from J. Am. Chem. Soc. 1994, 116, 7973, from Journal of Polymer Science: Part A: Polymer Chemistry, Vol. 38, 1753-1766 (2000), from Chem. Rev. 2001, 101, 3611-3659 and from Macromolecules 2006, 39, 8219-8222. A further controlled polymerization technique is degenerative chain transfer using iodine compounds as described, for example, in Macromolecules 2008, 41, 6261 or in U.S. Pat. No. 7,034,085. Controlled free-radical polymerization in the presence of thioketones is described, for example, in Chem. Commun., 2006, 835-837 and in Macromol. Rapid Commun. 2007, 28, 746-753. The copolymers can be random copolymers, block copolymers or gradient copolymers.

To influence the weight average molecular weight of the inventive copolymers and the molecular weight distribution of these copolymers, it is possible to use suitable control or chain transfer reagents. Examples include thiols such as n-octyl mercaptan, n-dodecyl mercaptan or t-dodecyl mercaptan and dimers of alpha-methylstyrene. For example, it is possible also to use small amounts of difunctional monomers (e.g. hexanediol diacrylate) in the polymerization in order to increase the weight average molecular weight in a controlled manner.

### Polysiloxane containing macromonomer (Monomer (a))

Preferably, at least one polysiloxane containing macromonomer (a) is used for the preparation of the inventive copolymer. Said macromonomer preferably contains - besides at least one polysiloxane moiety - precisely one ethylenically unsaturated group.

Preferably, at least one polysiloxane containing macromonomer (a) of formula (I) is used for the preparation of the inventive copolymer, 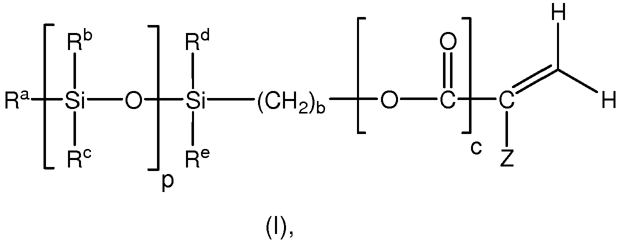 wherein
Z denotes H or C₁₋₄-alkyl, such as H or methyl,
parameter p is in the range of from 1 to 200,
parameter b is in the range of from 2 to 30,
parameter c is 0 or 1,
R^{a}, R^{b}, R^{c}, R^{d} and R^{e} independently of one another represent
   a linear, saturated, halogenated or non-halogenated alkyl group with 1 to 30 carbon atoms, more preferably with 1 to 20 carbon atoms, even more preferably with 1 to 10 carbon atoms, still more preferably, with 1 to 8 carbon atoms, in particular with 1 to 4 carbon atoms, most preferably with 1 to 2 carbon atoms or with 1 carbon atom only,
   a branched, saturated, halogenated or non-halogenated alkyl group with 3 to 30 carbon atoms, more preferably with 3 to 20 carbon atoms, even more
   preferably with 3 to 10 carbon atoms, still more preferably, with 3 to 6 carbon atoms,
   an aryl group with 6 to 30 carbon atoms, preferably with 6 to 15 carbon atoms, an alkylaryl group or arylalkyl group, in each case with 7 to 30 carbon atoms, preferably with 7 to 20 carbon atoms, or
   an alkoxyalkyleneoxide residue or an alkoxypolyalkyleneoxide residue, wherein the alkylene unit is in each case preferably a C₂-C₄, more preferably an C₂- and/or C₃- alkylene unit, such as e.g. -(CH₂)₃-O-[(CH₂)₂₋₃-O]ᵥ-CH₃, wherein v is 1 to 10,
wherein R^{d} may additionally represent -[O-Si(R^{b})(R^{c})]_{q}R^{a}, wherein R^{a}, R^{b} and R^{c} have independently of one another the above defined meanings, and parameter q is in the range of from 1 to 200,
wherein R^{e} may additionally represent -[O-Si(R^{b})(R^{c})]ₒR^{a}, wherein R^{a}, R^{b} and R^{c} have independently of one another the above defined meanings, and parameter o is in the range of from 1 to 200.

Preferably,
Z denotes H or C₁₋₄-alkyl, such as H or methyl,
parameter p is in the range of from 1 to 200,
parameter b is in the range of from 2 to 10,
parameter c is 0 or 1,
R^{a} represents
a linear, saturated, halogenated or non-halogenated alkyl group with 1 to 30 carbon atoms, more preferably with 1 to 20 carbon atoms, even more preferably with 1 to 10 carbon atoms, still more preferably, with 1 to 8 carbon atoms, in particular with 1 to 4 carbon atoms, most preferably with 1 to 2 carbon atoms or with 1 carbon atom only,
a branched, saturated, halogenated or non-halogenated alkyl group with 3 to 30 carbon atoms, more preferably with 3 to 20 carbon atoms, even more preferably with 3 to 10 carbon atoms, still more preferably, with 3 to 6 carbon atoms,
an aryl group with 6 to 30 carbon atoms, preferably with 6 to 15 carbon atoms,
an alkylaryl group or arylalkyl group, in each case with 7 to 30 carbon atoms, preferably with 7 to 20 carbon atoms, or
an alkoxyalkyleneoxide residue or an alkoxypolyalkyleneoxide residue, wherein the alkylene unit is in each case preferably a C₂-C₄, more preferably an C₂- and/or C₃-alkylene unit, such as e.g. -(CH₂)₃-O-[(CH₂)₂₋₃-O]ᵥ-CH₃, wherein v is 1 to 10,
and
R^{b}, R^{c}, R^{d} and R^{e} independently of one another represent a linear, saturated, halogenated or non-halogenated alkyl group with 1 to 30 carbon atoms, more preferably with 1 to 20 carbon atoms, even more preferably with 1 to 10 carbon atoms, still more preferably, with 1 to 8 carbon atoms, in particular with 1 to 4 carbon atoms, most preferably with 1 to 2 carbon atoms or with 1 carbon atom only,
a branched, saturated, halogenated or non-halogenated alkyl group with 3 to 30 carbon atoms, more preferably with 3 to 20 carbon atoms, even more preferably with 3 to 10 carbon atoms, still more preferably, with 3 to 6 carbon atoms,
an aryl group with 6 to 30 carbon atoms, preferably with 6 to 15 carbon atoms,
an alkylaryl group or arylalkyl group, in each case with 7 to 30 carbon atoms, preferably with 7 to 20 carbon atoms,
and wherein
wherein R^{d} may additionally represent -[O-Si(R^{b})(R^{c})]_{q}R^{a}, wherein R^{a}, R^{b} and R^{c} have independently of one another the above defined meanings, and parameter q is in the range of from 1 to 200,
wherein R^{e} may additionally represent -[O-Si(R^{b})(R^{c})]ₒR^{a}, wherein R^{a}, R^{b} and R^{c} have independently of one another the above defined meanings, and parameter o is in the range of from 1 to 200.

Preferably, at least one polysiloxane containing macromonomer (a) of formula (I) is used, wherein c is = 1, i.e. a polysiloxane containing macromonomer (a) of formula (Ia): 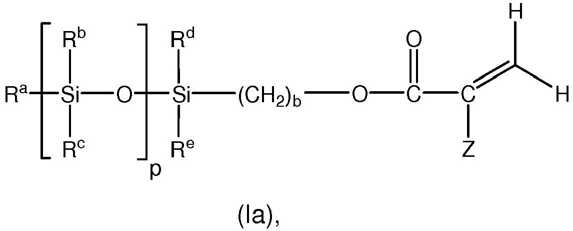 wherein R^{a}, R^{b}, R^{c}, R^{d}, R^{e}, p, b, q, o and Z have the meanings as defined above in connection with the definitions of the compound of formula (I) and the preferred embodiments thereof.

A person skilled is aware of methods of preparation for compounds of formula (I) and in particular mono-Si-H functional polydialkylsiloxanes. For example, such mono-Si-H functional polydialkylsiloxanes can be produced by a living polymerization, e.g. a living anionic polymerization, of cyclic siloxanes, such as hexamethylene cyclotrisiloxane. The termination can be e.g. achieved by use of a silane as exemplified below in Scheme 1. Such method is e.g. disclosed by Suzuki in Polymer, 30 (1989) 333, in WO 2009/086079 A2, EP 1 985 645 A2 and US 2013/0041098 A1.

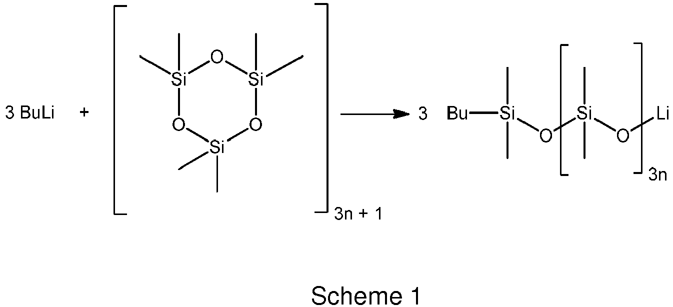

The functionalization of the end group, i.e. incorporation of an ethylenically unsaturated group such as a (meth)acrylic group can then be performed by reaction with e.g. suitable chlorosilanes, such as 3-(methacryloyloxy)propyl-dimethylchlorosilane as illustrated below in Scheme 2:

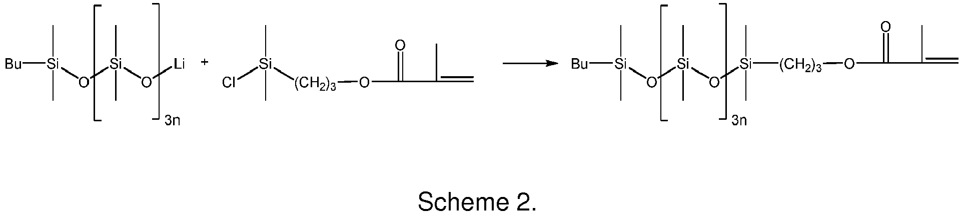

Other suitable chlorosilanes to be used include monomethyl(vinyl) dichlorosilane or trichloro(vinyl)silane.

According to the macromonomer method, the inventive copolymer is e.g. obtainable by radical copolymerization, preferably by free-radical copolymerization, of at least one polysiloxane containing macromonomer (a) such as a compound according to Formula (I), which comprises at least one polysiloxane moiety and precisely one polymerizable ethylenically unsaturated group, and at least one or more than one further radically, preferably free-radically, polymerizable monomer(s) containing at least one, preferably precisely one, ethylenically unsaturated group such as (meth)acrylic group.

### Further monomers ("comonomers")

Using the macromonomer method macromonomers as exemplified in formulae (I) and (la) are reacted with one or more further polymerizable monomers ("comonomers") such as ethylenically unsaturated monomers, in particular (meth)acrylates, to form the target copolymer of the present invention. Preferably, at least 85 % by weight, preferably at least 90 % by weight, more preferably at least 95 % by weight and even more preferred at least 98% by weight of the comonomers used to prepare the copolymer of the invention have only one polymerizable double bond.

Polymerizable comonomers are understood to mean those compounds which bear at least one polymerizable group. Polymerizable groups are understood to mean functional groups which can be polymerized under conditions customary therefore, for example ethylenically unsaturated groups such as (meth)acrylic groups.

Examples of ethylenically unsaturated polymerizable comonomers are as follows:
a1) essentially acid-group-free (meth)acrylic esters such as (meth)acrylic alkyl or cycloalkyl esters including having up to 22 carbon atoms, preferably 1 to 22 carbon atoms, in the (cyclo)alkyl radical, including alkyl acrylates and alkyl methacrylates of straight-chain alcohols having 1 to 22 carbon atoms or branched or cycloaliphatic alcohols having 3 to 22 carbon atoms, aralkyl acrylates and aralkyl methacrylates of aralkyl alcohols having 8 to 18 carbon atoms, wherein alkyl radical is linear or branched, preferably linear, especially methyl, ethyl, propyl, n-butyl, sec-butyl, tert-butyl, hexyl, ethylhexyl, stearyl and lauryl acrylate or methacrylate; cycloaliphatic (meth)acrylic esters, especially cyclohexyl, isobornyl, dicyclopentadienyl, octahydro-4,7-methano-1 H-indenemethanol or tert-butylcyclohexyl (meth)acrylate; (meth)acrylic oxaalkyl esters or oxacycloalkyl esters such as ethyltriglycol (meth)acrylate and methoxyoligoglycol (meth)acrylate, or other ethoxylated and/or propoxylated hydroxyl-free (meth)acrylic acid derivatives such as polyethylene glycol mono(meth)acrylates having from 5 to 80 carbon atoms, for example methoxypolyethylene glycol monoacrylate, and methoxypolyethylene glycol monomethacrylate. These may contain minor amounts of (meth)acrylic alkyl or cycloalkyl esters of higher functionality, such as the di(meth)acrylates of ethylene glycol, propylene glycol, diethylene glycol, dipropylene glycol, butylene glycol, 1,5-pentanediol, 1,6-hexanediol, octahydro-4,7-methano-1H-indenedimethanol or 1,2-, 1,3- or 1,4-cyclohexanediol; trimethylolpropane di- or tri(meth)acrylate; or pentaerythritol di-, tri- or tetra(meth)acrylate; maleic esters, itaconic esters and fumaric esters of straight-chain alcohols having 1 to 22 or branched or cycloaliphatic alcohols having 3 to 22 carbon atoms; fluorinated and fluorine-free alkyl esters of methacrylic acid, of maleic acid, of fumaric acid, of itaconic acid and of mesaconic acid (methylfumaric acid), methacrylic acid, acrylic acid,
a2) Monomers which carry per molecule at least one hydroxyl group, amino group, alkoxymethylamino group or imino group and are essentially free from acid groups, such as hydroxyalkyl esters of acrylic acid, methacrylic acid, preferably hydroxyalkyl (meth)acrylates of straight-chain diols having 2 to 36 carbon atoms or branched or cycloaliphatic diols having 3 to 36 carbon atoms, or another alpha,beta-olefinically unsaturated carboxylic acid, which derive from an alkylene glycol esterified with the acid, or which are obtainable by reacting the alpha,beta-olefinically unsaturated carboxylic acid with an alkylene oxide, especially hydroxyalkyl esters of acrylic acid, methacrylic acid, ethacrylic acid, crotonic acid, maleic acid, fumaric acid or itaconic acid in which the hydroxyalkyl group contains up to 20 carbon atoms, such as 2-hydroxyethyl, 2-hydroxypropyl, 3-hydroxypropyl, 3-hydroxybutyl, 4-hydroxybutyl acrylate, methacrylate, ethacrylate, crotonate, maleate, fumarate or itaconate; or hydroxycycloalkyl esters such as 1,4-bis(hydroxymethyl)cyclohexane, octahydro-4,7-methano-1H-indenedimethanol or methylpropanediol monoacrylate, mono-methacrylate, monoethacrylate, monocrotonate, monomaleate, monofumarate or monoitaconate; or reaction products of cyclic esters, such as epsilon-caprolactone and/or valerolactone such as caprolactone- and/or valerolactone-modified hydroxyethyl acrylate and caprolactone- and/or valerolactone-modified hydroxy-ethyl methacrylate; or olefinically unsaturated alcohols such as allyl alcohol or polyols such as trimethylolpropane monoallyl or diallyl ether or pentaerythritol monoallyl, diallyl or triallyl ether (as far as these monomers (a2) of higher functionality are concerned, the comments made above relating to the monomers (a1) of higher functionality apply analogously); N,N-dimethylaminoethyl acrylate, N,N-diethylaminoethyl methacrylate, allylamine or N-methyliminoethyl acrylate or N,N-di(methoxymethyl)aminoethyl acrylate and methacrylate or N,N-di(butoxymethyl)aminopropyl acrylate and methacrylate; hydroxyalkyl vinyl ethers such as hydroxybutyl vinyl ether; ethoxylated and/or propoxylated hydroxyl-functional (meth)acrylic acid derivatives such as triethylene glycol monoacrylate, triethylene glycol monomethacrylate, polyethylene glycol monoacrylate, polyethylene glycol monomethacrylate.
a3) Monomers which carry per molecule at least one acid group which can be converted into the corresponding acid anion group, such as acrylic acid, methacrylic acid, ethacrylic acid, crotonic acid, maleic acid, fumaric acid or itaconic acid; olefinically unsaturated sulfonic or phosphonic acids or their partial esters; or mono(meth)acryloyloxyethyl maleate, succinate or phthalate.
a4) Vinyl esters such as vinyl alkanoates having 2 to 30 carbon atoms, vinyl esters such as vinyl acetate, vinyl propionate, vinyl butyrate, vinyl pivalate and/or the vinyl ester of 2-methyl-2-ethylheptanoic acid; vinyl esters of alpha-branched monocarboxylic acids having 5 to 18 carbon atoms in the molecule: The branched monocarboxylic acids can be obtained by reacting formic acid or carbon monoxide and water with olefins in the presence of a liquid, strongly acidic catalyst; the olefins may be cracking products of paraffinic hydrocarbons, such as mineral oil fractions, and may comprise both branched and straight-chain acyclic and/or cycloaliphatic olefins. The reaction of such olefins with formic acid or, respectively, with carbon monoxide and water produces a mixture of carboxylic acids in which the carboxyl groups are located predominantly on a quaternary carbon atom. Examples of other olefinic starting materials are propylene trimer, propylene tetramer and diisobutylene. Alternatively, the vinyl esters (a4) may be prepared in a conventional manner from the acids, by reacting, for example, the acid with acetylene. Particular preference, owing to their ready availability, is given to using vinyl esters of saturated aliphatic monocarboxylic acids having 9 to 11 carbon atoms that are branched on the alpha carbon atom, but especially Versatic® acids.
a5) Reaction products of acrylic acid and/or methacrylic acid with the glycidyl ester of an alpha-branched monocarboxylic acid having 5 to 18 carbon atoms per molecule, especially a Versatic® acid, or, instead of the reaction product, an equivalent amount of acrylic acid and/or methacrylic acid which is then reacted during or after the polymerization reaction with the glycidyl ester of an alpha-branched monocarboxylic acid having 5 to 18 carbon atoms per molecule, especially a Versatic® acid.
a6) Cyclic and/or acyclic olefins, preferably olefins having 2 to 30 carbon atoms and arylalkenes having 8 to 30 carbon atoms such as ethylene, propylene, 1-butene, 1-pentene, 1-hexene, cyclohexene, cyclopentene, norbornene, butadiene, isoprene, cyclopentadiene and/or dicyclopentadiene.
a7) (Meth)acrylamides such as (meth)acrylamide, N-methyl-, N,N-dimethyl-, N-ethyl-, N,N-diethyl-, N-propyl-, N,N-dipropyl-, N-butyl-, N,N-dibutyl-, N-cyclohexyl-, N,N-cyclohexylmethyl- and/or N-methylol-, N,N-dimethylol-, N-methoxymethyl-, N,N-di(methoxymethyl)-, N-ethoxymethyl- and/or N,N-di(ethoxyethyl)-(meth)acrylamide.
a8) Monomers containing epoxide groups, such as the glycidyl esters of acrylic acid, methacrylic acid, ethacrylic acid, crotonic acid, maleic acid, fumaric acid and/or itaconic acid.
a9) Vinylaromatic hydrocarbons such as styrene, alpha-alkylstyrenes, especially alpha-methylstyrene, and/or vinyltoluene; vinylbenzoic acid (all isomers), N,N-diethylaminostyrene (all isomers), alpha-methylvinylbenzoic acid (all isomers), N,N-diethylamino-alpha-methylstyrene (all isomers) and/or p-vinylbenzenesulfonic acid.
a10) Nitriles such as acrylonitrile and/or methacrylonitrile.
a11) Vinyl compounds, especially vinyl halides and/or vinylidene dihalides such as vinyl chloride, vinyl fluoride, vinylidene dichloride or vinylidene difluoride; N-vinylamides such as vinyl-N-methylformamide, N-vinylcaprolactam, 1-vinylmidazole or N-vinylpyrrolidone; vinyl ethers such as ethyl vinyl ether, n-propyl vinyl ether, isopropyl vinyl ether, n-butyl vinyl ether, isobutyl vinyl ether and/or vinyl cyclohexyl ether; vinyl ketones having 3 to 20 carbon atoms,
a12) Allyl compounds, especially allyl ethers and allyl esters such as allyl methyl, ethyl, propyl or butyl ether or allyl acetate, propionate or butyrate.
a13) Acryloxysilane-containing vinyl monomers, preparable by reacting hydroxyl-functional silanes with epichlorohydrin and then reacting the reaction product with (meth)acrylic acid and/or with hydroxyalkyl and/or hydroxycycloalkyl esters of (meth)acrylic acid; vinyltrialkoxysilanes having 5 to 8 carbon atoms and methacryloyloxypropyltrialkoxysilanes having 10 to 16 carbon atoms.

In some applications it may be desired that the copolymers containing polysiloxane side chains when incorporated into coating compositions or polymeric moulding compounds, bear reactive groups such as hydroxyl and/or carboxylic acid groups. Preference is given to copolymers of the invention having at least one OH-group and an OH number of between 1 and 250 mg KOH/g and an acid number of between 0.5 and 30 mg KOH/g. The copolymers may thus have free OH groups. More preferably, the copolymers have an OH number of 5-200 mg KOH/g, very preferably of 10-100 mg KOH/g. In this case at least one OH-functional monomer is used for preparation of the inventive copolymer Particularly preferred hydroxyl-functional monomers include: hydroxylalkyl (meth)acrylates of straight-chain diols having 2 to 36 carbon atoms or branched or cycloaliphatic diols having 3 to 36 carbon atoms, for example 2-hydroxyethyl (meth)acrylate, 3-hydroxypropyl (meth)acrylate, 4-hydroxybutyl (meth)acrylate, 3,4-dihydroxybutyl (meth)acrylate, 2-hydroxypropyl (meth)acrylate, 2,5-dimethyl-1,6-hexanediol mono(meth)acrylate, polyethylene glycol mono(meth)acrylate, polypropylene glycol-ethylene glycol mono(meth)acrylate and hydroxyalkyl vinyl ethers, for example hydroxybutyl vinyl ether. Further suitable monomers are caprolactone- and/or valerolactone-modified hydroxyalkyl acrylates and caprolactone- and/or valerolactone-modified hydroxyalkyl methacrylates having a weight-average molecular weight between 220 and 1200 g/mol, the hydroxyl (meth)acrylates preferably being derived from straight-chain diols having 2 to 8 carbon atoms or branched or cycloaliphatic diols having 3 to 8 carbon atoms.

Preferably, the inventive copolymer is obtainable by copolymerization of monomers (a), (b) and (c) as well as optionally (d), namely
(a) at least one polysiloxane containing macromonomer such as a macromonomer of formula (I) or (la), which contains precisely one ethylenically unsaturated group,
(b) at least one methacrylic ester of a linear C₁₋C₂₂-alkyl monoalcohol or of a branched or cyclic C₃-C₂₂-(cyclo)alkyl monoalcohol,
(c) at least one acrylic ester of a linear C₁-C₂₂-alkyl monoalcohol or of a branched or cyclic C₃-C₂₂-(cyclo)alkyl monoalcohol, and
(d) optionally at least one further monomer having at least one ethylenically unsaturated group, which is different from each of monomers (a), (b) and (c).

Preferably, the at least one polysiloxane containing macromonomer (a) is a macromonomer of formula (I) or (la). Suitable polysiloxane containing macromonomers (a) are e.g. mono(meth)acryloxypropyl terminated polysiloxanes, such as mono(meth)acryloxypropyl terminated polysiloxanes of linear structure such as Silaplane™ FM-0711, FM-0721 and FM-0725 (available from the Chisso Corporation), AK-5 and AK-30 (available from Toagosei Co., Ltd.) as well as MCR-M07, MCR-M11, MCR-M17 and MCR-M22 (available from Gelest, Inc.) and of branched structuresuch as MCS-M11 (Bis[(n-butydimethylsiloxy)polydimethylsiloxy] (methacryloxypropyl)methylsilane), MFS-M15 (Bis[(n-butytrifluoropropyl-methylsiloxy)polytrifluoropropylmethylsiloxy](methacryloxypropyl)methylsilane), both available from Gelest, Inc.

Preferably, the at least one methacrylic ester (b) of a linear C₁₋C₂₂-alkyl monoalcohol or of a branched or cyclic C₃-C₂₂-(cyclo)alkyl monoalcohol is selected from the group consisting of methyl, ethyl, propyl, n-butyl, sec-butyl, tert-butyl, hexyl, ethylhexyl, stearyl and lauryl methacrylate, cyclohexyl as well as isobornyl, dicyclopentadienyl, octahydro-4,7-methano-1H-indenemethanol or tert-butylcyclohexyl methacrylate and mixtures thereof.

Preferably, the at least one acrylic ester (c) of a linear C₁-C₂₂-alkyl monoalcohol or of a branched or cyclic C₃-C₂₂-(cyclo)alkyl monoalcohol is selected from the group consisting of methyl, ethyl, propyl, n-butyl, sec-butyl, tert-butyl, hexyl, ethylhexyl, stearyl and lauryl acrylate, cyclohexyl as well as isobornyl, dicyclopentadienyl, octahydro-4,7-methano-1H-indenemethanol or tert-butylcyclohexyl acrylate and mixtures thereof.

The use of monomers (d) is only optional. Suitable monomers (d) having at least one ethylenically unsaturated group, which are different from each of monomers (a), (b) and (c), are in particular monomers (d-i), (d-ii) and/or (d-iii), namely
(d-i) at least one optionally functionalized monomer having at least one ethylenically unsaturated group, being different from each of monomers (a), (b) and (c) such as at least one (meth)acrylic ester of a linear C₁-C₂₂-alkyl monoalcohol or of a branched or cyclic C₃-C₂₂-(cyclo)alkyl monoalcohol, said (meth)acrylic ester being different from each of monomers (b) and (c), wherein the (cyclo)alkyl moieties of these (meth)acrylic esters may be monosubstituted with OH and/or COOH,
(d-ii) at least one monomer having at least two ethylenically unsaturated groups, and/or
(d-iii) at least one compound of formula (II),

   H₃C-CR^{a}R^{c}-CH₂-CR^{b}=CH₂ (II),

   wherein R^{a} and R^{b} independently of one another represent an aryl with 6 to 30 carbon atoms, CN or COOR¹,
      wherein R¹ represents H, an alkyl with 1 to 30 carbon atoms, an aryl with 6 to 30 carbon atoms, an alkylaryl or an arylalkyl, in each case with 7 to 30 carbon atoms and
   wherein R^{c} represents an alkyl with 1 to 30 carbon atoms, an aryl with 6 to 30 carbon atoms, an alkylaryl or an arylalkyl, in each case with 7 to 30 carbon atoms.

Examples of monomers (d-i) are e.g. any of the above identified monomers (a1) to (a14) as long as any of these monomers are different from macromonomer (a) and monomers (b) and (c). In particular, monomers containing functional groups may be used as monomers (d-i) in order to allow e.g. later binding into the respective polymeric matrix or the binder of the compositions. Such functional monomers are in particular hydroxy-functional and/or carboxyl-functional. Monomers which can crosslink with reactive groups of the binder ensure long lasting effects with respect to different properties of the resulting crosslinked composition. In order to control crosslinking of the resulting hydroxyl-functional or carboxyl-functional copolymers with, for example, acrylic-melamine-formaldehyde resins, it is also possible to react some or all of these hydroxyl groups with isocyanates to give secondary carbamate groups, such that the crosslinking of the overall system leaves the copolymer enough time to approach the interface, to display its effect there and, after a certain time delay, to react with the melamine-formaldehyde resin. Moreover, it was also found to be particularly advantageous that the hydroxyl groups of the monomer units in the inventive copolymers can crosslink with reactive groups of the binder and thus ensure a permanent effect. Particularly preferred monomers (d-i) are acrylic acid, methacrylic acid, maleic acid, maleic anhydride, fumaric acid, and itaconic acid; esters of maleic acid, fumaric acid and itaconic acid; hydroxyalkyl (meth)acrylates of linear, branched or cycloaliphatic diols having 2 to 36 C atoms, such as, for example, 3-hydroxypropyl methacrylate, 3,4-dihydroxybutyl methacrylate, 2-hydroxyethyl (meth)acrylate, 4-hydroxybutyl (meth)acrylate, 2-hydroxypropyl methacrylate, 2,5-dimethyl-1,6-hexanediol monomethacrylate; (meth)acrylates of ethers, polyethylene glycols, polypropylene glycols or mixed polyethylene/propylene glycols having 5 to 80 C atoms, such as, for example, tetrahydrofurfuryl methacrylate, methoxyethoxyethyl methacrylate, 1-butoxypropyl methacrylate, 1-methyl-(2-vinyloxy)ethyl methacrylate, cyclohexyloxymethyl methacrylate, methoxymethoxyethyl methacrylate, benzyloxymethyl methacrylate, furfuryl methacrylate, 2-butoxyethyl methacrylate, 2-ethoxyethoxymethyl methacrylate, 2-ethoxyethyl methacrylate, 1-ethoxybutyl methacrylate, methoxymethyl methacrylate, 1-ethoxyethyl methacrylate, ethoxymethyl methacrylate, poly(ethylene glycol) methyl ether (meth)acrylate, poly(propylene glycol) methyl ether (meth)acrylate; glycidoxypropyl methacrylate; caprolactone- and/or valerolactone-modified hydroxyalkyl (meth)acrylates having a number average molecular weight of 220 to 1200 g/mol, the hydroxy (meth)acrylates being derived preferably from linear, branched or cycloaliphatic diols having 2 to 8 C atoms; and also other monoethylenically unsaturated monomers suitable for copolymerization, e.g., styrene, α-methylstyrene, acrylonitrile, and vinyl ethers such as ethyl vinyl ether, butyl vinyl ether, and cyclohexyl vinyl ether.

Examples of monomers (d-ii) are monomers having at least two ethylenically unsaturated groups, preferably two or three two ethylenically unsaturated groups. Examples of such monomers are divinylbenzene, N,N'-bisacryloyl-1,2-diaminoethane, ethylene glycol dimethacrylate, ethylene glycol diacrylate, 1,6-hexanediol diacrylate, trimethylolpropane trimethacrylate, polyethylene glycol diacrylate, polyethylene glycol dimethacrylate, polypropylene glycol diacrylate, and polypropylene glycol dimethacrylate. Polyethylene or polypropylene glycol di(meth)acrylates include in particular triethylene and tripropylene glycol di(meth)acrylates. Particularly preferred is tripropylene glycol di(meth)acrylate.

Examples of monomers (d-iii) are monomers according to formula (II) are 2,4-dicyanopent-1-ene, 2,4-dicyano-4-methylpent-1-ene, 2,4-diphenyl-4-methylpent-1-ene, 2-cyano-4-methyl-4-phenylpent-1-ene, dimethyl 2,2-dimethyl-4-methylenepentane-1,5-dioate and dibutyl 2,2-dimethyl-4-methylenepentane-1,5-dioate. Particularly preferred is 2,4-diphenyl-4-methylpent-1-ene (alpha-methyl styrene dimer).

More preferably, the inventive copolymer is obtainable by copolymerization of monomers (a), (b) and (c) as well as optionally (d), namely
(a) 25 to 85 wt.-%, preferably 30 to 80 wt.-%, more preferably 35 to 75 wt.-%, of at least one polysiloxane containing macromonomer such as a macromonomer of formula (I) or (la), which contains precisely one ethylenically unsaturated group,
(b) 5 to 70 wt.-%, preferably 7.5 to 60 wt.-%, more preferably 10 to 50 wt.-%, of at least one methacrylic ester of a linear C₁-C₂₂-alkyl monoalcohol or of a branched or cyclic C₃-C₂₂-(cyclo)alkyl monoalcohol,
(c) 0.1 to 10 wt.-%, preferably 0.1 to 7.5 wt.-%, more preferably 0.2 to 5 wt.-%, of at least one acrylic ester of a linear C₁-C₂₂-alkyl monoalcohol or of a branched or cyclic C₃-C₂₂-(cyclo)alkyl monoalcohol, and
(d) optionally 0.1 to 30 wt.-%, preferably 0.1 to 20 wt.-%, more preferably 0.1 to 10 wt.-%, of at least one further monomer having at least one ethylenically unsaturated group, which is different from each of monomers (a), (b) and (c),
wherein the sum of monomers (a), (b) and (c) as well as optionally (d) used for the preparation of the copolymer adds up to 100 wt.-%.

Preferably, at least one, more preferably at least two, of the following monomers (d-i), (d-ii) and (d-iii) as monomer(s) (d) is/are used for the preparation of the inventive copolymer, namely
(d-i) at least one (meth)acrylic ester of a linear C₁-C₂₂-alkyl monoalcohol or of a branched or cyclic C₃-C₂₂-(cyclo)alkyl monoalcohol, said (meth)acrylic ester being different from each of monomers (b) and (c), wherein the (cyclo)alkyl moieties of these (meth)acrylic esters may be monosubstituted with OH and/or COOH,
(d-ii) at least one monomer having at least two ethylenically unsaturated groups, and/or
(d-iii) at least one compound of formula (II),

   H₃C-CR^{a}R^{c}-CH₂-CR^{b}=CH₂ (II),

   wherein R^{a} and R^{b} independently of one another represent an aryl with 6 to 30 carbon atoms, CN or COOR¹,
      wherein R¹ represents H, an alkyl with 1 to 30 carbon atoms, an aryl with 6 to 30 carbon atoms, an alkylaryl or an arylalkyl, in each case with 7 to 30 carbon atoms and
   wherein R^{c} represents an alkyl with 1 to 30 carbon atoms, an aryl with 6 to 30 carbon atoms, an alkylaryl or an arylalkyl, in each case with 7 to 30 carbon atoms.

The use of monomers (d-ii) and/or (d-iii) is particularly preferred.

In case both monomers (d-ii) and (d-iii) are used, preferably the amount in wt.-% of monomer (d-ii) does not exceed the amount of monomer (d-iii) in wt.-%.

In particular, the inventive copolymer is obtainable by copolymerization of monomers (a), (b) and (c) as well as optionally (d), namely
(a) 30 to 85 wt.-% of at least one polysiloxane containing macromonomer such as a macromonomer of formula (I) or (la), which contains precisely one ethylenically unsaturated group,
(b) 10 to 50 wt.-% of at least one methacrylic ester of a linear C₁-C₂₂-alkyl monoalcohol or of a branched or cyclic C₃-C₂₂-(cyclo)alkyl mono-alcohol,
(c) 0.1 to 10 wt.-% of at least one acrylic ester of a linear C₁-C₂₂-alkyl monoalcohol or of a branched or cyclic C₃-C₂₂-(cyclo)alkyl monoalcohol,
(d-ii) 0.1 to 10 wt.-% of at least one monomer having at least two (meth)acrylic groups, and
(d-iii) 0.1 to 10 wt.-% of at least one compound of formula (II),

   H₃C-CR^{a}R^{c}-CH₂-CR^{b}=CH₂ (II),

   wherein R^{a} and R^{b} independently of one another represent an aryl with 6 to 30 carbon atoms or COOR¹,
      wherein R¹ represents H, an alkyl with 1 to 30 carbon atoms, an aryl with 6 to 30 carbon atoms, an alkylaryl or an arylalkyl, in each case with 7 to 30 carbon atoms and
   wherein R^{c} represents an alkyl with 1 to 30 carbon atoms, an aryl with 6 to 30 carbon atoms, an alkylaryl or an arylalkyl, in each case with 7 to 30 carbon atoms,
   wherein the sum of monomers (a), (b) and (c) as well as monomers (d-ii) and (d-iii) used for the preparation of the copolymer adds up to 100 wt.-%.

The inventive copolymers are preferably prepared in a one-stage process in which the monomers (a), (b), (c) and optionally (d) and at least one initiator are jointly metered in. In case monomers (d), in particular (d-iii), is used, said monomers (d), in particular (d-iii) may alternatively be introduced as an initial charge and a mixture of the monomers of components (a), (b), and (c) and at least one initiator are metered in afterwards. Alternatively, only a part of monomers (a) are metered in and then a mixture of monomers (b), (c) and optionally (d) and at least one initiator are jointly metered in, followed by addition of the remaining part of monomers (a).

In each case, copolymers having a random constitution are produced. A random constitution means a constitution of the polymer featuring an irregular, random sequence of monomer units, which differs from a block constitution, a grafted constitution, and an alternating constitution. In particular, the branching points are distributed randomly in the copolymer. Accordingly, a randomly branched copolymer is formed in a one-stage process. In particular, the polysiloxane containing side chains are randomly distributed within the copolymer.

The copolymers can be modified subsequently by means of polymer-analogous reactions. For example, through the subsequent reaction with maleic anhydride it is possible to incorporate a reactive double bond and acid function as well. This acid function may also be salified with triethanolamine, for example, for improved water-solubility. It is also possible for free OH groups to be esterified by means, for example, of subsequent reaction with acetic anhydride, in order to allow more effective avoidance of potential intercoat adhesion problems where the copolymers of the invention are as additives in compositions such as coating compositions.

As outlined hereinbefore, a further aspect of the present invention is a process for the preparation of the inventive copolymer, which involves a step, wherein
(a) at least one polysiloxane containing macromonomer such as a macromonomer of formula (I) or (la), which contains precisely one ethylenically unsaturated group,
(b) at least one methacrylic ester of a linear C₁-C₂₂-alkyl monoalcohol or of a branched or cyclic C₃-C₂₂-(cyclo)alkyl monoalcohol,
(c) at least one acrylic ester of a linear C₁-C₂₂-alkyl monoalcohol or of a branched or cyclic C₃-C₂₂-(cyclo)alkyl monoalcohol, and
(d) optionally at least one further monomer having at least one ethylenically unsaturated group, which is different from each of monomers (a), (b) and (c).
are copolymerized to form the copolymer.

Preferably, said process involves a step, wherein
(a) 25 to 85 wt.-% of at least one polysiloxane containing macromonomer such as a macromonomer of formula (I) or (la), which contains precisely one ethylenically unsaturated group,
(b) 5 to 70 wt.-% of at least one methacrylic ester of a linear C₁-C₂₂-alkyl monoalcohol or of a branched or cyclic C₃-C₂₂-(cyclo)alkyl monoalcohol,
(c) 0.1 to 10 wt.-% of at least one acrylic ester of a linear C₁-C₂₂-alkyl monoalcohol or of a branched or cyclic C₃-C₂₂-(cyclo)alkyl monoalcohol, and
(d) optionally 0.1 to 30 wt.-% of at least one further monomer having at least one ethylenically unsaturated group, which is different from each of monomers (a), (b) and (c),
are copolymerized to form the copolymer, wherein the sum of monomers (a), (b) and (c) as well as optionally (d) used for the preparation of the copolymer adds up to 100 wt.-%.

All embodiments preferred in connection with the inventive copolymer described hereinabove are also preferred embodiments of the process for the preparation of the inventive copolymer.

### Composition

A further subject-matter of the present invention is a composition comprising at least one inventive copolymer in an additive amount, i.e. in relatively small amounts.

All embodiments preferred in connection with the inventive copolymer described hereinabove are also preferred embodiments of the inventive copolymer as a constituent of the composition of the invention.

Preferably, the composition is a coating composition, a thermoplastic or a moulding compound.

In case the inventive composition is a moulding compound, said moulding compound is preferably a polymeric moulding compound. Polymeric moulding compounds are understood to preferably encompass thermoset polymeric moulding compounds as well as thermoplastic polymeric moulding compounds. By moulding compounds are meant in the sense of the present inventions compositions which can be processed to mouldings.

Particularly preferred coating compositions are paints including pigmented paints, coating compositions which comprise dyes, and clear varnishes.

The amount of the inventive copolymers in the inventive composition is sufficient to achieve the desired effect with respect to e.g. adequate promotion of flow, increase in lubricity and enhancement of scratch resistance. Very small amounts may be sufficient to achieve a notable effect: for example, 0.005 wt.-% by weight based on the total weight of the coating composition can already have the desired effect.

Said composition preferably contains said at least one inventive copolymer in an amount of from 0.01 to 10 wt.-% or of from 0.1 to 10 wt.-%, preferably of from 0.05 to 8 wt.-% or of from 0.2 to 8 wt.-%, more preferably of from 0.1 to 7 wt.-% or of from 0.3 to 7 wt.-% or of from 0.3 to 6 wt.-% or of from 0.3 to 5 wt.-%, in particular of from 0.5 to 5.0 wt.-%, based in each case on the total weight of the solids content of the composition.

In another embodiment, the composition preferably contains said at least one inventive copolymer in an amount of from 0.1 to 20 wt.-%, preferably of from 0.2 to 18 wt.-%, more preferably of from 0.3 to 17 wt.-% or of from 0.3 to 16 wt.-% or of from 0.3 to 15 wt.-%, in particular of from 0.5 to 10.0 wt.-%, based in each case on the total weight of the composition.

The inventive copolymers are added preferably as 100% substances, as a solution, as dispersion or as an emulsion.

The properties of the compositions, in particular of the coating compositions, thermoplastics, moulding compounds and cosmetic formulations are not impaired by the amount of the inventive copolymer present therein. The presence or use of these copolymers does not have a negative effect e.g. in respect of corrosion protection, gloss preservation, weather resistance and/or mechanical strength of the coatings obtained from these compositions.

If the inventive copolymers contain at least one free reactive group such as an OH-group and/or a carboxyl acid group, it has been found to be particularly advantageous that the reactive groups of the copolymers can crosslink with reactive complementary groups of the binder and thus ensure a permanent effect. In this case the desired hydrophilic properties are generally retained even over a long period of time and even over several cleaning cycles.

The composition of the invention can be an aqueous or solvent-based composition. As a liquid phase these compositions may comprise organic solvents and/or water or plasticizers. The liquid phase may also be in the form of monomers or low molecular weight compounds which react with the other binder components to form the coatings such as suitable di(meth)acrylates. The composition according to the invention may, however, also be a powder coating composition, which thus contains no liquid phase and is applied in the form of powders to the substrates to be coated, where they are reacted. Powder coating materials are frequently applied using electrostatic application techniques.

The inventive compositions, in particular in case of a coating compositions, preferably comprise at least one binder. All customary binders known to the skilled person are suitable as binder component of the composition of the invention. The binder used in accordance with the invention may have crosslinkable functional groups. Any customary crosslinkable functional group known to the skilled person is contemplated here. More particularly the crosslinkable functional groups are selected from the group consisting of hydroxyl groups, amino groups, carboxylic acid groups, and unsaturated carbon double bonds, isocyanates, polyisocyanates, and epoxides such as ethylene oxides. The binder may be exothermically or endothermically crosslinkable or curable. The binder is crosslinkable or curable preferably in a temperature range from -20°C up to 250°C. The binder may be also a physically drying binder.

The composition of the invention can be provided as a one-component system or as a two-component system.

The inventive compositions may be used in pigmented or unpigmented form and may also comprise fillers such as calcium carbonate, aluminium hydroxide, reinforcing fibres such as glass fibres, carbon fibres and aramid fibres.

The binder is preferably selected from the group consisting of epoxide resins, polyesters such as polyethylene terephthalate and poly-butylene terephthalate, wherein the polyesters may be unsaturated, vinyl ester-based resins, polyamides, poly(meth)acrylates, poly(meth)acrylonitrile, polyurethanes, polyureas, polyamides, polystyrenes (including e.g. ABS, SEBS, SBS), polyvinyl chloride, polyethers including polycarbonates, polyisocyanates, nitrocellulose, silicone resins such as silicone alkyd resins, phenylmethyl silicone resins, silicone-polyester resins, silicone-epoxide resins and silicone-polyurethane resins, and melamine formaldehyde resins. These polymers may be homopolymers or copolymers. These resins and their preparation are known to the skilled person. A particularly preferred binder is polymethyl(meth)acrylate (PMMA).

Thermoplastics for the purposes of the invention are preferably poly(meth)acrylates, polyacrylonitrile, polystyrene, styrenic polymers (e.g. ABS, SEBS, SBS), polyesters, polycarbonates, polyethylene terephthalate, poly-butylene terephthalate, polyamides, thermoplastic polyurethanes (TPU), polyvinyl chloride, polyoxymethylene, polyethylene and polypropylene. Thermoplastics for the purposes of the invention include mixtures (blends) of different kinds of thermoplastics. The thermoplastics may also, for example, comprise spinnable thermoplastic fibres that are known such as polyester fibres or polyamide fibres, for example. Particularly preferred thermoplastics are those based on poly(methyl methacrylate) (PMMA).

The composition of the invention preferably comprises the binder in an amount of 2 to 90 wt.-%, preferably in an amount of 3 to 80 wt.-%, more preferably in an amount of 5 to 75 wt.-%, in particular 7.5 to 60 wt.-%, based on the total weight of the composition.

Depending on the desired application, the composition of the invention may comprise one or more customarily employed additives as component. These additives are preferably selected from the group consisting of emulsifiers, flow control assistants, solubilizers, defoaming agents, stabilizing agents, preferably heat stabilizers, process stabilizers, and UV and/or light stabilizers, catalysts, waxes, flexibilizers, flame retardants, reactive diluents, adhesion promoters, organic and/or inorganic nanoparticles having a particle size < 100 nm, process aids, plasticizers, fillers, glass fibers, reinforcing agents, wetting agents and dispersants, catalysts and/or curing accelerators, and also agents having a rheological activity, light stabilizers, ageing inhibitors and mixtures of the aforesaid additives. Said additive content of the composition of the invention may vary very widely depending on intended use. The content, based on the total weight of the composition of the invention, is preferably 0.1 to 10.0 wt.-%, more preferably 0.1 to 8.0 wt.-%, very preferably 0.1 to 6.0 wt.-%, especially preferably 0.1 to 4.0 wt.-%, and particularly 0.1 to 2.0 wt.-%.

The compositions of the invention may be applied to a large number of substrates, such as wood, paper, glass, ceramic, plaster, concrete and metal, for example. In a multi-coat process the coatings may also be applied to primers, primer-surfacers or basecoats. Curing of the compositions depends on the particular type of crosslinking and may take place within a wide temperature range from, for example, -10° C. to 250° C. The effect of the inventive copolymers used in accordance with the invention is, however, particularly advantageous in heat-curable coating materials, since the temperature stability of the inventive copolymers used in accordance with the invention is usually comparably high, for example temperature stability is still present at baking conditions at temperatures up to 250° C and for relatively short baking times of e.g. 5 to 30 minutes even at temperatures up to 350° C.

The preferably polymeric moulding compounds of the invention preferably comprise at least one polymer selected from the group consisting of lacquer resins, alkyd resins, vinyl resins, polyester resins, epoxy resins, polyurethane resins, unsaturated polyester resins, vinyl ester resins, polyethylene, polyamides, polypropylene, polyamides, phenolic resins, polyethylene terephthlate, PVC, polystyrene, polyacrylonitrile, polybutadiene, polyvinyl chloride or mixtures of these polymers or any copolymers thereof. Preferred moulding compounds for the purposes of the invention are, for example, those based on unsaturated polyester resins and vinyl resins, to which it is possible as well to add thermoplastics such as polystyrene, polyvinyl acetate, polymethyl methacrylate and styrene-butadiene copolymers, in the form, for example, of components reducing contraction. Further moulding compounds are, in particular, polyurethanes and polyamides, which can be used, for example, in the reaction injection moulding process and exhibit particular difficulties in respect of demouldability. Other moulding compounds may also have a construction based on epoxy resins. These epoxy resins are preferably used in the field of casting compounds and compression-moulding compounds. Further moulding compounds, which can be processed, for example, by the wet compression process, injection process or pultrusion process, are the phenol-formaldehyde condensation resins, also known by the term "phenolic resins".

The moulding compounds in general may likewise include the additives or other constituents that are customary in the prior art, such as have also been already mentioned above with respect to the inventive composition as such. In particular it is possible for such moulding compounds to comprise reinforcing and/or non-reinforcing fillers, such as glass fibres, carbon fibres and polyamide fibres, for example, wollastonites, silicates, inorganic carbonates, aluminium hydroxide, barium sulphate and kaolins, and also nanoscale fillers based on alumina and silica.

The compositions of the invention are preferably suitable as anti-graffiti coatings, release coatings, self-cleaning (façade) coatings, ice formation-resistant coatings, in particular for aircrafts, stain-resistant coatings, in particular for car bodies or alloy wheels or dirt-repelling machines, and device coatings, dirt-repelling furniture coatings or ship coatings such as anti-fouling coatings and release paper coatings.

### Use

The invention further provides for the use of the inventive copolymers as additives in compositions such as coating compositions, thermoplastics, or moulding compounds.

The inventive copolymer can be used as additives in compositions, preferably as additives selected from the group consisting of lubricants, slipping agents, dirt repellants, additives for increasing the hydrophobicity of a surface, additives for improving the scratch resistance, anti-adhesives, anti-blocking agents and antifriction agents. Particularly, the inventive copolymer can be used as lubricant in the compositions.

Said composition preferably contains said at least one inventive copolymer in an amount of from 0.01 to 10 wt.-% or of from 0.1 to 10 wt.-%, preferably of from 0.05 to 8 wt.-% or of from 0.2 to 8 wt.-%, more preferably of from 0.1 to 7 wt.-% or of from 0.3 to 7 wt.-% or of from 0.3 to 6 wt.-% or of from 0.3 to 5 wt.-%, in particular of from 0.5 to 5.0 wt.-%, based in each case on the total weight of the solids content of the composition in order to provide the desired additive effect.

In another embodiment, the composition preferably contains said at least one inventive copolymer in an amount of from 0.1 to 20 wt.-%, preferably of from 0.2 to 18 wt.-%, more preferably of from 0.3 to 17 wt.-% or of from 0.3 to 16 wt.-% or of from 0.3 to 15 wt.-%, in particular of from 0.5 to 10.0 wt.-%, based in each case on the total weight of the composition in order to provide the desired additive effect.

In particular, the inventive copolymers are used as lubricants in particular in coating compositions. The copolymers can also be in particular used, for example as slipping agents, dirt repellants, additives for improving the scratch resistance and anti-blocking agents. Besides a use as lubricant, additional beneficial properties such as easy-to-clean also obtained by using at least one inventive copolymer as additive.

### TEST METHODS

### Determination of Mₙ and M_{w}

The number average (Mₙ) and weight average (M_{w}) molecular weights and the molecular weight distribution of the prepared macromonomers and copolymers or any precursors thereof are determined by GPC-analysis (gel permeation chromatography analysis) according to DIN 55672-1:2007-08 at 40°C using a high-pressure liquid chromatography pump (WATERS 600 HPLC pump) and a refractive index detector (Waters 410). A combination of 3 Styragel columns from WATERS with a size of 300 mm x 7.8 mm ID/column, a particle size of 5 µm and pore sizes HR4, HR2 and HR1 is used as separating columns. The eluent used for the copolymers was Tetrahydrofuran with an elution rate of 1 ml/min. The conventional calibration was carried out using Polystyrene standards. For the macromonomers and all macromonomer precursors the eluent was Toluene with an elution rate of 1 ml/min. The conventional calibration was carried out using Polydimethylsiloxane standards.

### Solid Matter

The amount of solid matter is determined via DIN EN ISO 3251:2008-06 at 150°C for 20 min.

### EXAMPLES

The following examples further illustrate the invention but are not to be construed as limiting its scope. In the following, all amounts given refer to parts by weight if not indicated otherwise.

### 1. Synthesis

### Preparation of an inventively used methacryl-functional polydimethylsiloxane (PDMS) macromonomer M1

A four-necked flask provided with stirrer, thermometer, dropping funnel and nitrogen inlet tube is heated carefully to 150°C under nitrogen flow using a heat gun to remove traces of water. After cooling of the apparatus to ambient temperature under nitrogen flow, the vessel is charged with a solution of 679.3 g Hexamethylcyclotrisiloxane (D3) in 545.30 g cyclohexane, which has been dried over molecular sieve A3 for 24 h. At a reaction temperature of 20°C, 100.0 g n-butyl lithium solution (1.7M in hexane, Aldrich) was introduced over a period of 5 min. The reaction mixture was not allowed to exceed 30°C by cooling with a water bath. After 30 min, 545.30 g THF was slowly added to start the polymerization reaction. The temperature was monitored and kept below 30°C. After 5 h, the reaction was quenched by the addition of 92.29 g 3-methacryloxy propyl dimethylchlorosilane (97%, ABCR) and stirred for additional 30 min. Afterwards, the mixture was neutralized by the addition of a 4.82 g Sodium bicarbonate solution in 53.85 g water (8.0 wt.-%) and vigorously stirred for 1 h. The organic layer was separated, distilled in vacuum (20 mbar at 100°C) to remove all solvents completely and filtered through a plug of Celite. The product M1 (an unsymmetrical, methacryl-functional polydimethyl-siloxane) is a clear, colorless liquid of low viscosity. M1 is a linear methacryl-functional polydimethylsiloxane (PDMS) macromonomer, which has the below depicted structure, wherein p is as defined hereinbefore:

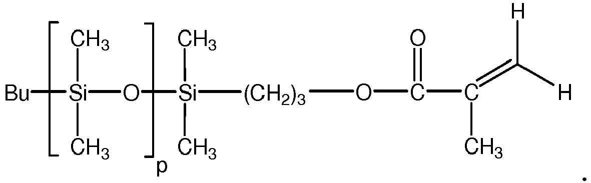

The weight average molecular weight (M_{w}) of the macromonomer M1 obtained is 2159 g/mol. The polydispersity P is = 1.1.

### Preparation of a comparatively used methacryl-functional polydimethylsiloxane (PDMS) macromonomer M1'

Comparatively used macromonomer M1' is synthesized in a similar way as M1 with the difference that twice the amount of n-butyl lithium solution is used and the additional difference that the end-capping is done with 3-(methacryloyloxy) propyl methyldichlorosilane instead of 3-(methacryloyloxy) propyl dimethylchlorosilane, i.e. that the reaction was quenched by the addition of 3-(methacryloyloxy) propyl methyldichlorosilane instead of 3-(methacryloyloxy) propyl dimethylchlorosilane in order to obtain a branched instead of a linear methacryl-functional polydimethylsiloxane (PDMS) macromonomer. M1' has the below depicted structure, wherein p is as defined hereinbefore:

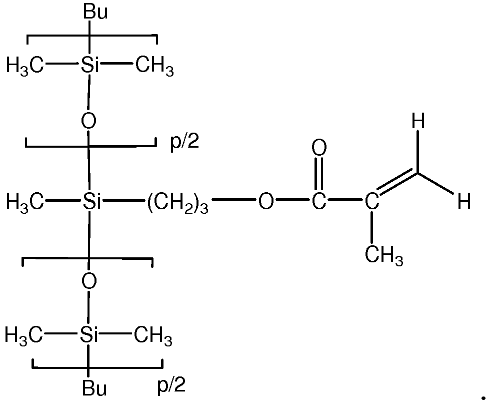

The weight average molecular weight (M_{w}) of the macromonomer M1' obtained is 2311 g/mol. The polydispersity P is = 1.24.

### Comparative example C1

In a four-necked flask provided with stirrer, thermometer, dropping funnel and nitrogen inlet tube are places 1.48 g of the PDMS macromonomer M1 (entry 1) and 59.24 g iso-butanol (entry 2) and mixed under stirring and under nitrogen flow. The resulting mixture is heated to 100°C. At this temperature over a period of 185 minutes a mixture of 49.67 g methyl methacrylate (MMA) (entry 3), 0.76 g ethyl acrylate (EA) (entry 4), 0.77 g alpha-methylstyrol dimer (2,4-Diphenyl-4-methyl-1-pentene) (entry 5), 0.15 g tripropyleneglycol diacrylate (TPGDA) (entry 6), 2.47 g Perkadox (AMBN: 2,2'-Azodi(2-methylbutyronitril) (entry 7) available from Akzo Nobel, NL-Amersfoort) and another 1.48 g of the PDMS macromonomer M1 (entry 8) are added. Afterwards another 0.81 g of Perkadox (entry 9) are added. After another 30 minutes further 0.81 g of Perkadox (entry 10) are added. Again, after another 60 minutes further 0.81 g Perkadox (entry 11) are added at this temperature. The reaction mixture is then stirred for another 60 minutes at 100°C. At this temperature the mixture is a clear and colorless liquid. After cooling to 20°C, however, a solid is obtained. The obtained comparative copolymer C1 has a weight average molecular weight (M_{w}) of 7561 g/mol and a polydispersity P of 2.4. The entries identified above refer to Table 1 below. The copolymer obtained is comparative since only 4.3 wt.-% of all monomers used for its preparation are represented by the PDMS macromonomer M1.

In the following Table 1, the starting material as well as the further components and their amounts used for the preparation of C1 are summarized.

**Table 1 - Preparation of comparative copolymer C1**

| **Entry** | **Starting material and components used** | **Amount** |
|---|---|---|
| 1 | Macromonomer M1 | 1.48 g |
| 2 | Iso-butanol | 59.24 g |
| | | |
| 3 | Methyl methacrylate (MMA) | 49.67 g |
| 4 | Ethyl acrylate (EA) | 0.76 g |
| 5 | alpha-methylstyrol dimer | 0.77 g |
| 6 | Tripropyleneglycol diacrylate (TPGDA) | 0.15 g |
| 7 | Perkadox | 2.47 g |
| 8 | Macromonomer M1 | 1.48 g |
| | | |
| 9 | Perkadox | 0.81 g |
| 10 | Perkadox | 0.81 g |
| 11 | Perkadox | 0.81 g |

### Comparative example C2

Comparative copolymer C2 is prepared in a similar procedure as described for comparative copolymer C1, except that different amounts of starting material and the further components are used as summarized in Table 2 below. The obtained comparative copolymer C2 has a weight average molecular weight (M_{w}) of 7804 g/mol and a polydispersity P of 2.3. The copolymer obtained is comparative since only 9.8 wt.-% of all monomers used for its preparation are represented by the PDMS macromonomer M1.

**Table 2 - Preparation of comparative copolymer C2**

| **Entry** | **Starting material and components used** | **Amount** |
|---|---|---|
| 1 | Macromonomer M1 | 3.38 g |
| 2 | Iso-butanol | 75.00 g |
| | | |
| 3 | Methyl methacrylate (MMA) | 57.85 g |
| 4 | Ethyl acrylate (EA) | 3.02 g |
| 5 | alpha-methylstyrol dimer | 0.98 g |
| 6 | Tripropyleneglycol diacrylate (TPGDA) | 0.19 g |
| 7 | Perkadox | 3.13 g |
| 8 | Macromonomer M1 | 3.38 g |
| | | |
| 9 | Perkadox | 1.02 g |
| 10 | Perkadox | 1.02 g |
| 11 | Perkadox | 1.02 g |

### Inventive example I1

Inventive copolymer I1 is prepared in a similar procedure as described for comparative copolymer C1, except that different amounts of starting material and the further components are used as summarized in Table 3 below. Further, the reactants/components listed in entries 3 to 8 of Table 3 were added at 100°C over a period of 195 minutes. A clear and colorless liquid at 100°C is obtained as product. After cooling to 20°C, however, a wax-like substance is obtained. The obtained inventive copolymer I1 has a weight average molecular weight (M_{w}) of 7791 g/mol and a polydispersity P of 2.8. The copolymer obtained is inventive since 29.5 wt.-% of all monomers used for its preparation are represented by the PDMS macromonomer M1.

**Table 3 - Preparation of inventive copolymer I1**

| **Entry** | **Starting material and components used** | **Amount** |
|---|---|---|
| 1 | Macromonomer M1 | 10.15 g |
| 2 | Iso-butanol | 75.00 g |
| | | |
| 3 | Methyl methacrylate (MMA) | 45.00 g |
| 4 | Ethyl acrylate (EA) | 2.35 g |
| 5 | alpha-methylstyrol dimer | 0.98 g |
| 6 | Tripropyleneglycol diacrylate (TPGDA) | 0.19 g |
| 7 | Perkadox | 3.13 g |
| 8 | Macromonomer M1 | 10.15 g |
| | | |
| 9 | Perkadox | 1.02 g |
| 10 | Perkadox | 1.02 g |
| 11 | Perkadox | 1.02 g |

### Inventive example I2

Inventive copolymer I2 is prepared in a similar procedure as described for comparative copolymer C1, except that different amounts of starting material and the further components are used as summarized in Table 4 below. Further, the reactants/components listed in entries 3 to 8 of Table 4 were added at 100°C over a period of 180 minutes only. A clear and colorless liquid at 100°C is obtained as product. After cooling to 20°C, however, a hazy and colorless liquid is obtained as product. The obtained inventive copolymer I2 has a weight average molecular weight (M_{w}) of 7901 g/mol and a polydispersity P of 3.1. The copolymer obtained is inventive since 49.0 wt.-% of all monomers used for its preparation are represented by the PDMS macromonomer M1.

**Table 4 - Preparation of inventive copolymer I2**

| **Entry** | **Starting material and components used** | **Amount** |
|---|---|---|
| 1 | Macromonomer M1 | 16.91 g |
| 2 | Iso-butanol | 75.00 g |
| | | |
| 3 | Methyl methacrylate (MMA) | 32.14 g |
| 4 | Ethyl acrylate (EA) | 1.68 g |
| 5 | alpha-methylstyrol dimer | 0.98 g |
| 6 | Tripropyleneglycol diacrylate (TPGDA) | 0.19 g |
| 7 | Perkadox | 3.13 g |
| 8 | Macromonomer M1 | 16.91 g |
| | | |
| 9 | Perkadox | 1.02 g |
| 10 | Perkadox | 1.02 g |
| 11 | Perkadox | 1.02 g |

### Inventive example I3

Inventive copolymer I3 is prepared in a similar procedure as described for comparative copolymer C1, except that different amounts of starting material and the further components are used as summarized in Table 5 below. A clear and yellowish liquid both at 100°C and at 20°C is obtained as product. The obtained inventive copolymer I3 has a weight average molecular weight (M_{w}) of 8315 g/mol and a polydispersity P of 3.7. The copolymer obtained is inventive since 70.5 wt.-% of all monomers used for its preparation are represented by the PDMS macromonomer M1.

**Table 5 - Preparation of inventive copolymer I3**

| **Entry** | **Starting material and components used** | **Amount** |
|---|---|---|
| 1 | Macromonomer M1 | 19.07 g |
| 2 | Iso-butanol | 50.84 g |
| | | |
| 3 | Methyl methacrylate (MMA) | 14.49 g |
| 4 | Ethyl acrylate (EA) | 0.76 g |
| 5 | alpha-methylstyrol dimer | 0.77 g |
| 6 | Tripropyleneglycol diacrylate (TPGDA) | 0.15 g |
| 7 | Perkadox | 2.47 g |
| 8 | Macromonomer M1 | 19.07 g |
| | | |
| 9 | Perkadox | 0.81 g |
| 10 | Perkadox | 0.81 g |
| 11 | Perkadox | 0.81 g |

### Comparative example C3

Comparative copolymer C3 is prepared in a similar procedure as described for comparative copolymer C1, except that different amounts of starting material and the further components are used as summarized in Table 6 below. Further, the reactants/components listed in entries 3 to 8 of Table 6 were added at 100°C over a period of 195 minutes. A clear and colorless liquid both at 100°C and at 20°C is obtained as product. The obtained comparative copolymer C3 has a weight average molecular weight (M_{w}) of 7832 g/mol and a polydispersity P of 3.8. The copolymer obtained is comparative since 88.5 wt.-% of all monomers used for its preparation are represented by the PDMS macromonomer M1.

**Table 6 - Preparation of comparative copolymer C3**

| **Entry** | **Starting material and components used** | **Amount** |
|---|---|---|
| 1 | Macromonomer M1 | 30.43 g |
| 2 | Iso-butanol | 75.00 g |
| | | |
| 3 | Methyl methacrylate (MMA) | 6.43 g |
| 4 | Ethyl acrylate (EA) | 0.33 g |
| 5 | alpha-methylstyrol dimer | 0.98 g |
| 6 | Tripropyleneglycol diacrylate (TPGDA) | 0.19 g |
| 7 | Perkadox | 3.13 g |
| 8 | Macromonomer M1 | 30.43 g |
| | | |
| 9 | Perkadox | 1.02 g |
| 10 | Perkadox | 1.02 g |
| 11 | Perkadox | 1.02 g |

### Comparative example C4

Comparative copolymer C4 is prepared in a similar procedure as described for comparative copolymer C1, except that different amounts of starting material and the further components are used as summarized in Table 7 below. Further, the reactants/components listed in entries 3 to 7 of Table 7 were added at 100°C over a period of 100 minutes only. A clear and yellowish liquid both at 100°C and at 20°C is obtained as product. The obtained comparative copolymer C4 has a weight average molecular weight (M_{w}) of 6512 g/mol and a polydispersity P of 3.3. The copolymer obtained is comparative since 98.1 wt.-% of all monomers used for its preparation are represented by the PDMS macromonomer M1.

**Table 7 - Preparation of comparative copolymer C4**

| **Entry** | **Starting material and components used** | **Amount** |
|---|---|---|
| 1 | Macromonomer M1 | 18.19 g |
| 2 | Iso-butanol | 40.35 g |
| | | |
| 3 | Iso-butanol | 9.65 g |
| 4 | alpha-methylstyrol dimer | 0.65 g |
| 5 | Tripropyleneglycol diacrylate (TPGDA) | 0.12 g |
| 6 | Perkadox | 2.09 g |
| 7 | Macromonomer M1 | 26.89 g |
| | | |
| 8 | Perkadox | 0.68 g |
| 9 | Perkadox | 0.68 g |
| 10 | Perkadox | 0.68 g |

### Comparative example C5

Comparative copolymer C5 is prepared in a similar procedure as described for inventive copolymer I1 with the only difference that instead of inventively used linear macromonomer M1 comparatively used branched macromomomer M1' has been used. The obtained comparative copolymer C5 has a weight average molecular weight (M_{w}) of 7591 g/mol and a polydispersity P of 2.93. The copolymer obtained is comparative since branched macromonomer M1' instead of linear macromonomer M1 has been used for its preparation.

### Comparative example C6

Comparative copolymer C6 is prepared in a similar procedure as described for inventive copolymer I2 with the only difference that instead of inventively used linear macromonomer M1 comparatively used branched macromomomer M1' has been used. The obtained comparative copolymer C6 has a weight average molecular weight (M_{w}) of 7472 g/mol and a polydispersity P of 3.54. The copolymer obtained is comparative since branched macromonomer M1' instead of linear macromonomer M1 has been used for its preparation.

### Comparative example C7

Comparative copolymer C7 is prepared in a similar procedure as described for inventive copolymer I3 with the only difference that instead of inventively used linear macromonomer M1 comparatively used branched macromomomer M1' has been used. The obtained comparative copolymer C7 has a weight average molecular weight (M_{w}) of 7504 g/mol and a polydispersity P of 3.90. The copolymer obtained is comparative since branched macromonomer M1' instead of linear macromonomer M1 has been used for its preparation.

The following Table 8 summarizes inventive copolymer I1, I2 and I3 as well as comparative copolymers C1, C2, C3 and C4 as well as C5, C6 and C7 as far as the amount of the polysiloxane containing macromonomer M1 or M1' used as well as the polysiloxane content of the copolymers are concerned:

**Table 8:**

| **Copolymer** | **Amount of M1 or M1' used [wt.-%] (based on the total weight of all monomers)** | **Polysiloxane content of the copolymer [wt.-%] (based on the total weight of the copolymer)** |
|---|---|---|
| C1 | 4.3 | 4.0 |
| C2 | 9.8 | 9.2 |
| I1 | 29.5 | 27.8 |
| I2 | 49.0 | 46.1 |
| I3 | 70.5 | 66.4 |
| C3 | 88.5 | 83.3 |
| C4 | 98.1 | 92.3 |
| C5 | 29.5 | 27.8 |
| C6 | 49.0 | 46.1 |
| C7 | 70.5 | 66.4 |

### 2. Application and performance

### 2.1 Preparation of PMMA solutions

A solution of polymethyl methacrylate (PMMA) in ethyl acetate is prepared. Said solution contains 10 wt.-% of PMMA, based on the total weight of the solution. To 100 g of said solution is added 0.5 g of comparative copolymer C1 resulting in a PMMA-C1 solution. In a similar manner, a total of further six PMMA-solutions are prepared, wherein in each case comparative copolymer C2, C3, C4, C5, C6, C7 or one of inventive copolymers I1, I2 or I3 has been added to such a PMMA solution in said amount. In this manner, solutions PMMA-C2, PMMA-C3, PMMA-C4, PMMA-C5, PMMA-C6, PMMA-C7, PMMA-I1, PMMA-I2 and PMMA-I3 are obtained.

Each of these copolymer containing PMMA solutions is applied to a glass plate (100 x 250 mm) in a thickness of 150 µm. After drying and evaporation of the solvent in each case a dry film thickness of 15 µm was achieved. A further PMMA solution ("PMMA" in Table 9) without any copolymer is applied to a glass plate in a similar manner, which serves as a reference sample.

### 2.2 Determination of the contact angle of water

The contact angle of water was determined on the coated glass plates prepared as described above (item **2.1**) using a *Krüss* instrument (model "easy drop" having an integrated camera). The contact angle of water is measured in order to characterize the hydrophobicity of a surface. The measurements were performed at 23°C and a relative humidity of 65%. The results were evaluated by using the software provided together with the *Krüss* instrument. The higher the contact angle is, the more pronounced is the hydrophobicity and the easy-to-clean effect.

Measurements were performed one day after application of each PMMA solution to the glass substrate, directly after subsequent cleaning of the coated surface with isopropanol and after three weeks of storage at 24°C after performance of the cleaning with isopropanol. After cleaning of the surface with isopropanol, the additive is depleted from the surface and, consequently, the contact angles decreases. After three weeks of storage at 24°C the surface is replenished and becomes hydrophobic again and, consequently, the contact angles increases. The results obtained from these measurements are depicted below in Tables 9a and 9b.

**Table 9a:**

| *PMMA solution used* | *Contact angle of water [°] (measured 1 day after application)* | *Contact angle of water [°] (measured directly after cleaning with isopropanol 1 day after application)* | *Contact angle of water [°] (measured after 3 weeks of storage after cleaning with isopropanol 1 day after application)* |
|---|---|---|---|
| PMMA-C1 | 96 | 71 | 98 |
| PMMA-C2 | 99 | 76 | 97 |
| PMMA-I1 | 104 | 75 | 105 |
| PMMA-I2 | 107 | 75 | 106 |
| PMMA-I3 | 100 | 78 | 105 |
| PMMA-C3 | 95 | 78 | 98 |
| PMMA-C4 | 98 | 80 | 99 |
| PMMA (Reference) | 73 | 67 | 69 |

As it is evident from Table 9a, only coatings obtained from PMMA-I1, PMMA-I2 and PMMA-I3 show good hydrophobic properties, i.e. have a contact angle of >100° after 3 weeks of storage at 24°C after cleaning with isopropanol 1 day after application.

**Table 9b:**

| *PMMA solution used* | *Contact angle of water [°] (measured 1 day after application)* | *Contact angle of water [°] (measured after 3 weeks of storage after cleaning with isopropanol 1 day after application)* |
|---|---|---|
| PMMA-I1 | 104 | 105 |
| PMMA-I2 | 107 | 106 |
| PMMA-I3 | 100 | 105 |
| PMMA-C5 | 96 | 90 |
| PMMA-C6 | 100 | 93 |
| PMMA-C7 | 100 | 92 |

As it is evident from Table 9b, coatings obtained from PMMA-I1, PMMA-I2 and PMMA-I3 show better hydrophobic properties than coatings obtained from PMMA-C5, PMMA-C6 and PMMA-C7. This indicates that the inventive copolymers I1, I2 and I3 obtained from the linear polysiloxane macromonomer M1 exhibit superior water repellency as compared to the comparative copolymers C5, C6 and C7 obtained from the branched polysiloxane macromonomer M1' when incorporated into coatings.

### 2.3 Determination of the surface energy and the polar and disperse parts thereof

For these measurements, five different test liquids with well-known surface tensions and polar and disperse parts were used. The test liquids are water, glycerin, ethylene glycol, 1-octanol and n-dodecane. The contact angle of the test liquids on the coated panels (i.e. the glass plates coated with PMMA-C1, PMMA-C2, PMMA-C3, PMMA-C4, PMMA-C5, PMMA-C6, PMMA-C7, PMMA-I1, PMMA-I2, PMMA-I3 or PMMA is measured by the contact angle method as described above from drop volumes of 5 to 11 µL. The surface energy is determined with the method of Owens-Wendt-Rabel and Kaelble. The results obtained from these measurements are depicted below in Tables 10a and 10b. The lower the polar part of the surface energy, the more advanced is the desired easy-to-clean effect.

**Table 10a:**

| | *Results obtained directly after cleaning with isopropanol 1 day after application* | | | *Results obtained after 1 week of storage at 24 °C after cleaning with isopropanol 1 day after application* | | |
|---|---|---|---|---|---|---|
| *PMMA solution used* | *Surface energy (total) [mN*/*m]* | *Disperse [mN*/*m]* | *Polar [mN*/*m]* | *Surface energy (total) [mN*/*m]* | *Disperse [mN*/*m]* | *Polar [mN*/*m]* |
| PMMA-C1 | 25.2 | 23.5 | 1.7 | 24.5 | 23.6 | 0.9 |
| PMMA-C2 | 24.3 | 23.7 | 0.6 | 25.3 | 24.1 | 1.2 |
| PMMA-I1 | 24.3 | 24.0 | 0.3 | 24.8 | 24.7 | 0.1 |
| PMMA-I2 | 25.1 | 25.0 | 0.1 | 25.6 | 25.5 | 0.1 |
| PMMA-I3 | 24.4 | 23.8 | 0.6 | 25.3 | 25.1 | 0.2 |
| PMMA-C3 | 25.9 | 24.0 | 1.9 | 24.6 | 23.6 | 1 |
| PMMA-C4 | 25.0 | 23.9 | 1.1 | 25.7 | 25.2 | 0.5 |
| PMMA (Reference) | 30.5 | 19.2 | 11.3 | 34.1 | 18.8 | 15.2 |

As it is evident from Table 10a only coatings obtained from PMMA-I1, PMMA-I2 and PMMA-I3 show a sufficient easy-to clean effect obtained after 1 week of storage, which is demonstrated by the values of 0.1 to 0.2 mN/m representing the polar parts of the surface energy as determined.

**Table 10b:**

| | *Results obtained directly after cleaning with isopropanol 1 day after application* | | | *Results obtained after 1 week of storage at 24 °C after cleaning with isopropanol 1 day after application* | | |
|---|---|---|---|---|---|---|
| *PMMA solution used* | *Surface energy (total) [mN*/*m]* | *Disperse [mN*/*m]* | *Polar [mN*/*m]* | *Surface energy (total) [mN*/*m]* | *Disperse [mN*/*m]* | *Polar [mN*/*m]* |
| PMMA-I1 | 24.3 | 24.0 | 0.3 | 24.8 | 24.7 | 0.1 |
| PMMA-I2 | 25.1 | 25.0 | 0.1 | 25.6 | 25.5 | 0.1 |
| PMMA-I3 | 24.4 | 23.8 | 0.6 | 25.3 | 25.1 | 0.2 |
| PMMA-C5 | 24.1 | 22.6 | 1.5 | 27.9 | 23.4 | 4.5 |
| PMMA-C6 | 24.7 | 24.1 | 0.6 | 23.7 | 22.3 | 1.4 |
| PMMA-C7 | 28.1 | 24.3 | 3.9 | 24.2 | 21.4 | 2.8 |

As it is evident from Table 10b coatings obtained from PMMA-I1, PMMA-I2 and PMMA-I3 show a better easy-to clean effect after 1 week of storage. In contrast, the coatings obtained from PMMA-C5, PMMA-C6 and PMMA-C7 show higher values for the polar parts of the surface energy. This indicates that the inventive copolymers I1, I2 and I3 obtained from the linear polysiloxane macromonomer M1 exhibit superior easy-to-clean properties as compared to the comparative copolymers C5, C6 and C7 obtained from the branched polysiloxane macromonomer M1' when incorporated into coatings.

### 2.4 Edding marker test

The film surface of each the coated glass plates obtained from PMMA-C1, PMMA-C2, PMMA-C3, PMMA-C4, PMMA-C5, PMMA-C6, PMMA-C7, PMMA-I1, PMMA-I2, PMMA-I3 or PMMA is inscribed with an Edding 400 permanent marker and a visual assessment is made of whether the surface can be written on. An assessment is made of whether the ink spreads on the surface, or contracts. After the ink has dried, an attempt is made to remove it by wiping with a dry cloth.

Evaluation: 1-5 (1=ink contracts, can be removed without residue using a paper cloth; 5=ink spreads very well on the substrate, and is virtually impossible to remove)

The results of the edding marker test displayed in Tables 11a and 11b are in accordance with results obtained from the surface energy measurements as outlined above and displayed in Tables 10a and 10b.

**Table 11a:**

| *PMMA solution used* | *Evaluation 1 day after application* | *Evaluation after 1 week of storage at 24 °C after cleaning with isopropanol 1 day after application* |
|---|---|---|
| PMMA-C1 | 5 | 4 |
| PMMA-C2 | 4 | 3 |
| PMMA-I1 | 2 | 2 |
| PMMA-I2 | 1 | 1 |
| PMMA-I3 | 2 | 2 |
| PMMA-C3 | 5 | 4 |
| PMMA-C4 | 4 | 4 |
| PMMA | 5 | 5 |

As it is evident from Table 11a only coatings obtained from PMMA-I1, PMMA-I2 and PMMA-I3 show a sufficient easy-to clean effect.

**Table 11b:**

| *PMMA solution used* | *Evaluation 1 day after application* | *Evaluation after 1 week of storage at 24 °C after cleaning with isopropanol 1 day after application* |
|---|---|---|
| PMMA-I1 | 2 | 2 |
| PMMA-I2 | 1 | 1 |
| PMMA-I3 | 2 | 2 |
| PMMA-C5 | 3 | 4 |
| PMMA-C6 | 3 | 3 |
| PMMA-C7 | 4 | 5 |

As it is evident from Table 11b only coatings obtained from PMMA-I1, PMMA-I2 and PMMA-I3 show a sufficient easy-to clean effect. This indicates that the inventive copolymers I1, I2 and I3 obtained from the linear polysiloxane macromonomer M1 exhibit superior easy-to-clean properties as compared to the comparative copolymers C5, C6 and C7 obtained from the branched polysiloxane macromonomer M1' when incorporated into coatings.

### 2.5 Determination of the reduction in slip resistance

For determining the COF-value (coefficient of friction), i.e. the reduction in slip resistance), the glass plates coated with one of PMMA-C1, PMMA-C2, PMMA-C3, PMMA-C4, PMMA-I1, PMMA-I2, PMMA-I3 or PMMA are each subjected to a measurement using the ALTEK Company instrument Altek-9505 AE. This involves a 500 g weight being drawn over the coated glass plates at a speed of 127 mm/min. The results of are displayed in Table 12.

**Table 12:**

| *PMMA solution used* | *Reduction in slip resistance [%], measured 1 day after application* | *Reduction in slip resistance [%], measured after 1 week of storage after cleaning with isopropanol 1 day after application* |
|---|---|---|
| PMMA-C1 | 40 | 0 |
| PMMA-C2 | 54 | 16 |
| PMMA-I1 | 55 | 31 |
| PMMA-I2 | 58 | 24 |
| PMMA-I3 | 63 | 24 |
| PMMA-C3 | 71 | 23 |
| PMMA-C4 | 67 | 10 |
| PMMA | 0 | 0 |

As it is evident from Table 12, only coatings obtained from PMMA-I1, PMMA-I2 and PMMA-I3 show a COF reduction of more than 20% after 1 week of storage after cleaning with isopropanol 1 day after application.

## Claims

1. A (meth)acrylic copolymer having a weight average molecular weight in the range of from 2,000 to 200,000 and comprising a backbone and polysiloxane containing side chains attached to said backbone,
wherein the polysiloxane portions of the polysiloxane containing side chains attached to the backbone represent from >25.0 to 75.0 wt.-%, based on the total weight of the copolymer and
wherein the polysiloxane containing side chains attached to the backbone of the copolymer independently of another are represented by the part structure (P) 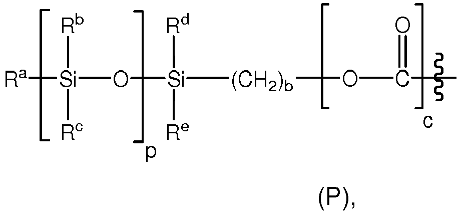 wherein
the symbol 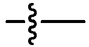 denotes a covalent bond of part structure (P) to the backbone of the inventive copolymer,
parameter p is in the range of from 1 to 200,
parameter b is in the range of from 2 to 30,
parameter c is 0 or 1,
R^{a}, R^{b}, R^{c}, R^{d} and R^{e} independently of one another represent a linear, saturated, halogenated or non-halogenated alkyl group with 1 to 30 carbon atoms, a branched, saturated, halogenated or non-halogenated alkyl group with 3 to 30 carbon atoms, an aryl group with 6 to 30 carbon atoms, an alkylaryl group or arylalkyl group, in each case with 7 to 30 carbon atoms, or an alkoxyalkyleneoxide residue or an alkoxypolyalkyleneoxide residue.

2. The copolymer according to claim 1, **characterized in that** the polysiloxane portions of the polysiloxane containing side chains attached to the backbone represent from 27.5 to 75.0 wt.-%, based on the total weight of the copolymer.

3. The copolymer according to claim 1 or 2, **characterized in that** the (meth)acrylic copolymer has a weight average molecular weight in the range of from 3,000 to 100,000.

4. The copolymer according to any of the preceding claims, **characterized in that** it is obtainable by copolymerization of monomers (a), (b) and (c) as well as optionally (d), namely
(a) 25 to 85 wt.-% of at least one polysiloxane containing macromonomer, which contains precisely one ethylenically unsaturated group,
(b) 5 to 70 wt.-% of at least one methacrylic ester of a linear C₁-C₂₂-alkyl monoalcohol or of a branched or cyclic C₃-C₂₂-(cyclo)alkyl monoalcohol,
(c) 0.1 to 10 wt.-% of at least one acrylic ester of a linear C₁-C₂₂-alkyl monoalcohol or of a branched or cyclic C₃-C₂₂-(cyclo)alkyl monoalcohol, and
(d) optionally 0.1 to 30 wt.-% of at least one further monomer having at least one ethylenically unsaturated group, which is different from each of monomers (a), (b) and (c),
wherein the sum of monomers (a), (b) and (c) as well as optionally (d) used for the preparation of the copolymer adds up to 100 wt.-%.

5. The copolymer according to claim 4, **characterized in that** at least one of the following monomers (d-i), (d-ii) and (d-iii) as monomer(s) (d) is/are used for the preparation of the copolymer, namely
(d-i) at least one (meth)acrylic ester of a linear C₁-C₂₂-alkyl monoalcohol or of a branched or cyclic C₃-C₂₂-(cyclo)alkyl monoalcohol, said (meth)acrylic ester being different from each of monomers (b) and (c), wherein the (cyclo)alkyl moieties of these (meth)acrylic esters may be monosubstituted with OH and/or COOH,
(d-ii) at least one monomer having at least two ethylenically unsaturated groups, and/or
(d-iii) at least one compound of formula (II),
H₃C-CR^{a}R^{c}-CH₂-CR^{b}=CH₂ (II),
wherein R^{a} and R^{b} independently of one another represent an aryl with 6 to 30 carbon atoms, CN or COOR¹,
wherein R¹ represents H, an alkyl with 1 to 30 carbon atoms, an aryl with 6 to 30 carbon atoms, an alkylaryl or an arylalkyl, in each case with 7 to 30 carbon atoms and
wherein R^{c} represents an alkyl with 1 to 30 carbon atoms, an aryl with 6 to 30 carbon atoms, an alkylaryl or an arylalkyl, in each case with 7 to 30 carbon atoms.

6. The copolymer according to any of the preceding claims, **characterized in that** it is obtainable by copolymerization of monomers (a), (b) and (c) as well as optionally (d), namely
(a) 30 to 85 wt.-% of at least one polysiloxane containing macromonomer, which contains precisely one ethylenically unsaturated group,
(b) 10 to 50 wt.-% of at least one methacrylic ester of a linear C₁-C₂₂-alkyl monoalcohol or of a branched or cyclic C₃-C₂₂-(cyclo)alkyl monoalcohol,
(c) 0.1 to 10 wt.-% of at least one acrylic ester of a linear C₁-C₂₂-alkyl monoalcohol or of a branched or cyclic C₃-C₂₂-(cyclo)alkyl monoalcohol,
(d-ii) 0.1 to 10 wt.-% of at least one monomer having at least two (meth)acrylic groups, and
(d-iii) 0.1 to 10 wt.-% of at least one compound of formula (II),
H₃C-CR^{a}R^{c}-CH₂-CR^{b}=CH₂ (II),
wherein R^{a} and R^{b} independently of one another represent an aryl with 6 to 30 carbon atoms or COOR¹,
wherein R¹ represents H, an alkyl with 1 to 30 carbon atoms, an aryl with 6 to 30 carbon atoms, an alkylaryl or an arylalkyl, in each case with 7 to 30 carbon atoms and
wherein R^{c} represents an alkyl with 1 to 30 carbon atoms, an aryl with 6 to 30 carbon atoms, an alkylaryl or an arylalkyl, in each case with 7 to 30 carbon atoms,
wherein the sum of monomers (a), (b) and (c) as well as monomers (d-ii) and (d-iii) used for the preparation of the copolymer adds up to 100 wt.-%.

7. The copolymer according to any of the preceding claims, **characterized in that** at least one polysiloxane containing macromonomer (a) of formula (I) is used for its preparation, 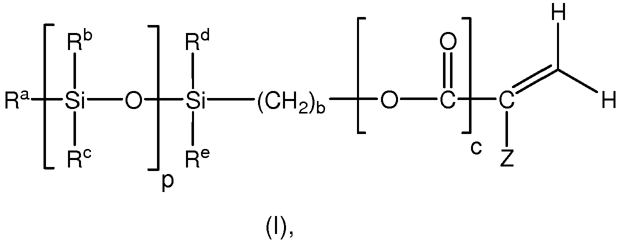 wherein
Z denotes H or C₁₋₄-alkyl,
parameter p is in the range of from 1 to 200,
parameter b is in the range of from 2 to 30,
parameter c is 0 or 1,
R^{a}, R^{b}, R^{c}, R^{d} and R^{e} independently of one another represent a linear, saturated, halogenated or non-halogenated alkyl group with 1 to 30 carbon atoms, a branched, saturated, halogenated or non-halogenated alkyl group with 3 to 30 carbon atoms, an aryl group with 6 to 30 carbon atoms, an alkylaryl group or arylalkyl group, in each case with 7 to 30 carbon atoms, or an alkoxyalkyleneoxide residue or an alkoxypolyalkyleneoxide residue.

8. The copolymer according to claim 7, **characterized in that**
Z denotes H or C₁₋₄-alkyl,
parameter p is in the range of from 1 to 200,
parameter b is in the range of from 2 to 10,
parameter c is 1,
R^{a} represents a linear, saturated, halogenated or non-halogenated alkyl group with 1 to 30 carbon atoms, a branched, saturated, halogenated or non-halgenated alkyl group with 3 to 30 carbon atoms, an aryl group with 6 to 30 carbon atoms, an alkylaryl group or arylalkyl group, in each case with 7 to 30 carbon atoms, or an alkoxyalkyleneoxide residue or an alkoxypolyalkyleneoxide residue -(CH₂)₃-O-[(CH₂)₂₋₃-O]ᵥ-CH₃, wherein v is 1 to 10,
R^{b}, R^{c}, R^{d} and R^{e} independently of one another represent a linear, saturated, halogenated or non-halgenated alkyl group with 1 to 30 carbon atoms, a branched, saturated, halogenated or non-halgenated alkyl group with 3 to 30 carbon atoms, an aryl group with 6 to 30 carbon atoms, an alkylaryl group or arylalkyl group, in each case with 7 to 30 carbon atoms.

9. A process for the preparation of the copolymer according to any of the preceding claims, **characterized in that** said process involves a step, wherein
(a) 25 to 85 wt.-% of at least one polysiloxane containing macromonomer, which contains precisely one ethylenically unsaturated group,
(b) 5 to 70 wt.-% of at least one methacrylic ester of a linear C₁-C₂₂-alkyl monoalcohol or of a branched or cyclic C₃-C₂₂-(cyclo)alkyl monoalcohol,
(c) 0.1 to 10 wt.-% of at least one acrylic ester of a linear C₁-C₂₂-alkyl monoalcohol or of a branched or cyclic C₃-C₂₂-(cyclo)alkyl monoalcohol, and
(d) optionally 0.1 to 30 wt.-% of at least one further monomer having at least one ethylenically unsaturated group, which is different from each of monomers (a), (b) and (c),
are copolymerized to form the copolymer, wherein the sum of monomers (a), (b) and (c) as well as optionally (d) used for the preparation of the copolymer adds up to 100 wt.-%.

10. A composition comprising at least one copolymer of according to any one of claims 1 to 8, wherein the composition contains said at least one copolymer in an additive amount.

11. The composition according to claim 10, **characterized in that** the composition contains the at least one copolymer in an amount of from 0.1 to 20 wt.-%, based on the total weight of the composition.

12. The composition according to claim 10 or 11, **characterized in that** the composition is a coating composition, a thermoplastic, or a moulding compound.

13. A use of a copolymer according to any one of claims 1 to 8 as an additive in compositions according to any one of claims 10 to 12.

14. The use according to claim 13, **characterized in that** the copolymer is used as an additive selected from the group consisting of lubricants, slipping agents, dirt repellants, additives for increasing the hydrophobicity of a surface, additives for improving the scratch resistance, anti-adhesives, anti-blocking agents and anti-friction agents.

## Patentansprüche

1. (Meth)Acrylat-Copolymer, das ein gewichtsmittleres Molekulargewicht im Bereich von 2000 bis 200.000 aufweist und eine Hauptkette und an die Hauptkette gebundene polysiloxanhaltige Seitenketten umfasst, wobei die Polysiloxanteile der an die Hauptkette gebundenen polysiloxanhaltigen Seitenketten >25,0 bis <75,0 Gew.-%, bezogen auf das Gesamtgewicht des Copolymers, ausmachen und
wobei die an die Hauptkette des Copolymers gebundenen polysiloxanhaltigen Seitenketten unabhängig voneinander durch die Teilstruktur (P) wiedergegeben werden: 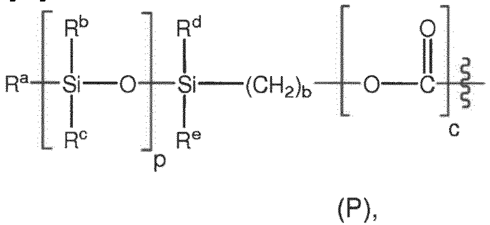 wobei
das Symbol 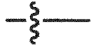 für eine kovalente Bindung der Teilstruktur (P) an die Hauptkette des erfindungsgemäßen Copolymers steht,
der Parameter p im Bereich von 1 bis 200 liegt, der Parameter b im Bereich von 2 bis 30 liegt, der Parameter c 0 oder 1 ist,
R^{a}, R^{b}, R^{c}, R^{d} und R^{e} unabhängig voneinander für eine lineare, gesättigte, halogenierte oder nichthalogenierte Alkylgruppe mit 1 bis 30 Kohlenstoffatomen, eine verzweigte, gesättigte, halogenierte oder nichthalogenierte Alkylgruppe mit 3 bis 30 Kohlenstoffatomen, eine Arylgruppe mit 6 bis 30 Kohlenstoffatomen, eine Alkylarylgruppe oder Arylalkylgruppe, jeweils mit 7 bis 30 Kohlenstoffatomen, oder einen Alkoxyalkylenoxidrest oder einen Alkoxypolyalkylenoxidrest stehen.

2. Copolymer nach Anspruch 1, **dadurch gekennzeichnet, dass** die Polysiloxanteile der an die Hauptkette gebundenen polysiloxanhaltigen Seitenketten 27,5 bis 75,0 Gew.-%, bezogen auf das Gesamtgewicht des Copolymers, ausmachen.

3. Copolymer nach Anspruch 1 oder 2, **dadurch gekennzeichnet, dass** das (Meth)Acryl-Copolymer ein gewichtsmittleres Molekulargewicht im Bereich von 3000 bis 100.000 aufweist.

4. Copolymer nach einem der vorhergehenden Ansprüche, **dadurch gekennzeichnet, dass** es durch Copolymerisation von Monomeren (a) (b) und (c) sowie gegebenenfalls (d) erhältlich ist, nämlich
(a) 25 bis 85 Gew.-% mindestens eines polysiloxanhaltigen Makromonomers, das genau eine ethylenisch ungesättigte Gruppe enthält,
(b) 5 bis 70 Gew.-% mindestens eines Methacrylsäureesters eines linearen C₁-C₂₂-Alkylmono-alkohols oder eines verzweigten oder cyclischen C₃-C₂₂-(Cyclo)Alkylmonoalkohols,
(c) 0,1 bis 10 Gew.-% mindestens eines Acrylsäureesters eines linearen C₁-C₂₂-Alkylmonoalkohols oder eines verzweigten oder cyclischen C₃-C₂₂-(Cyclo)Alkylmonoalkohols und
(d) gegebenenfalls 0,1 bis 30 Gew.-% mindestens eines weiteren Monomers mit mindestens einer ethylenisch ungesättigten Gruppe, das von jedem der Monomere (a), (b) und (c) verschieden ist,
wobei sich die Summe der für die Herstellung des Copolymers verwendeten Monomere (a), (b) und (c) sowie gegebenenfalls (d) zu 100 Gew.-% summiert.

5. Copolymer nach Anspruch 4, **dadurch gekennzeichnet, dass** mindestens eines der folgenden Monomere (d-i), (d-ii) und (d-iii) als Monomer(e) (d) für die Herstellung des Copolymers verwendet wird, nämlich
(d-i) mindestens ein (Meth)Acrylsäureester eines linearen C₁-C₂₂-Alkylmonoalkohols oder eines verzweigten oder cyclischen C₃-C₂₂-(Cyclo)Alkylmono-alkohols, wobei der (Meth)Acrylsäureester von jedem der Monomere (b) und (c) verschieden ist, wobei die (Cyclo)Alkylgruppierungen dieser (Meth)Acrylsäureester einfach durch OH und/oder COOH substituiert sein können,
(d-ii) mindestens ein Monomer mit mindestens zwei ethylenisch ungesättigten Gruppen und/oder (d-iii) mindestens eine Verbindung der Formel (II),
H₃C-CR^{a}R^{c}-CH₂-CR^{b}=CH₂ (II),
wobei R^{a} und R^{b} unabhängig voneinander für ein Aryl mit 6 bis 30 Kohlenstoffatomen, CN oder COOR¹ stehen,
wobei R¹ für H, ein Alkyl mit 1 bis 30 Kohlenstoffatomen, ein Aryl mit 6 bis 30 Kohlenstoffatomen, ein Alkylaryl oder ein Arylalkyl, jeweils mit 7 bis 30 Kohlenstoffatomen, steht, und
wobei R^{c} für ein Alkyl mit 1 bis 30 Kohlenstoffatomen, ein Aryl mit 6 bis 30 Kohlenstoffatomen, ein Alkylaryl oder ein Arylalkyl, jeweils mit 7 bis 30 Kohlenstoffatomen, steht.

6. Copolymer nach einem der vorhergehenden Ansprüche, **dadurch gekennzeichnet, dass** es durch Copolymerisation von Monomeren (a) (b) und (c) sowie gegebenenfalls (d) erhältlich ist, nämlich
(a) 30 bis 85 Gew.-% mindestens eines polysiloxanhaltigen Makromonomers, das genau eine ethylenisch ungesättigte Gruppe enthält,
(b) 10 bis 50 Gew.-% mindestens eines Methacrylsäureesters eines linearen C₁-C₂₂-Alkylmono-alkohols oder eines verzweigten oder cyclischen C₃-C₂₂-(Cyclo)Alkylmonoalkohols,
(c) 0,1 bis 10 Gew.-% mindestens eines Acrylsäureesters eines linearen C₁-C₂₂-Alkylmonoalkohols oder eines verzweigten oder cyclischen C₃-C₂₂-(Cyclo)Alkylmonoalkohols
(d-ii) 0,1 bis 10 Gew.-% mindestens eines Monomers mit mindestens zwei ethylenisch ungesättigten Gruppen und
(d-iii) 0,1 bis 10 Gew.-% mindestens einer Verbindung der Formel (II),
H₃C-CR^{a}R^{c}-CH₂-CR^{b}=CH₂ (II),
wobei R^{a} und R^{b} unabhängig voneinander für ein Aryl mit 6 bis 30 Kohlenstoffatomen oder COOR¹ stehen,
wobei R¹ für H, ein Alkyl mit 1 bis 30 Kohlenstoffatomen, ein Aryl mit 6 bis 30 Kohlenstoffatomen, ein Alkylaryl oder ein Arylalkyl, jeweils mit 7 bis 30 Kohlenstoffatomen, steht, und
wobei R^{c} für ein Alkyl mit 1 bis 30 Kohlenstoffatomen, ein Aryl mit 6 bis 30 Kohlenstoffatomen, ein Alkylaryl oder ein Arylalkyl, jeweils mit 7 bis 30 Kohlenstoffatomen, steht,
wobei sich die Summe der für die Herstellung des Copolymers verwendeten Monomere (a), (b) und (c) sowie der Monomere (d-ii) und (d-iii) zu 100 Gew.-% summiert.

7. Copolymer nach einem der vorhergehenden Ansprüche, **dadurch gekennzeichnet, dass** für seine Herstellung mindestens ein polysiloxanhaltiges Makromonomer (a) der Formel (I) verwendet wird, 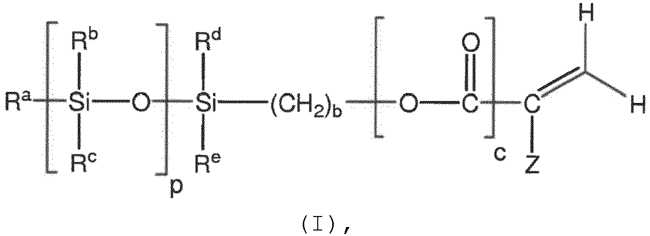 wobei
Z für H oder C₁₋₄-Alkyl steht,
der Parameter p im Bereich von 1 bis 200 liegt, der Parameter b im Bereich von 2 bis 30 liegt, der Parameter c 0 oder 1 ist,
R^{a}, R^{b}, R^{c}, R^{d} und R^{e} unabhängig voneinander für eine lineare, gesättigte, halogenierte oder nichthalogenierte Alkylgruppe mit 1 bis 30 Kohlenstoffatomen, eine verzweigte, gesättigte, halogenierte oder nichthalogenierte Alkylgruppe mit 3 bis 30 Kohlenstoffatomen, eine Arylgruppe mit 6 bis 30 Kohlenstoffatomen, eine Alkylarylgruppe oder Arylalkylgruppe, jeweils mit 7 bis 30 Kohlenstoffatomen, oder einen Alkoxyalkylenoxidrest oder einen Alkoxypolyalkylenoxidrest stehen.

8. Copolymer nach Anspruch 7, **dadurch gekennzeichnet, dass**
Z für H oder C₁₋₄-Alkyl steht,
der Parameter p im Bereich von 1 bis 200 liegt, der Parameter b im Bereich von 2 bis 10 liegt,
der Parameter c 1 ist,
R^{a} für eine lineare, gesättigte, halogenierte oder nichthalogenierte Alkylgruppe mit 1 bis 30 Kohlenstoffatomen, eine verzweigte, gesättigte, halogenierte oder nichthalogenierte Alkylgruppe mit 3 bis 30 Kohlenstoffatomen, eine Arylgruppe mit 6 bis 30 Kohlenstoffatomen, eine Alkylarylgruppe oder Arylalkylgruppe, jeweils mit 7 bis 30 Kohlenstoffatomen, oder einen Alkoxyalkylenoxidrest oder einen Alkoxypolyalkylenoxidrest -(CH₂)₃-O-[(CH₂)₂₋₃-O]ᵥ-CH₃, wobei v 1 bis 10 ist, steht,
R^{b}, R^{c}, R^{d} und R^{e} unabhängig voneinander für eine lineare, gesättigte, halogenierte oder nichthalogenierte Alkylgruppe mit 1 bis 30 Kohlenstoffatomen, eine verzweigte, gesättigte, halogenierte oder nichthalogenierte Alkylgruppe mit 3 bis 30 Kohlenstoffatomen, eine Arylgruppe mit 6 bis 30 Kohlenstoffatomen, eine Alkylarylgruppe oder Arylalkylgruppe, jeweils mit 7 bis 30 Kohlenstoffatomen, stehen.

9. Verfahren zur Herstellung des Copolymers nach einem der vorhergehenden Ansprüche, **dadurch gekennzeichnet, dass** das Verfahren einen Schritt umfasst, bei dem
(a) 25 bis 85 Gew.-% mindestens eines polysiloxanhaltigen Makromonomers, das genau eine ethylenisch ungesättigte Gruppe enthält,
(b) 5 bis 70 Gew.-% mindestens eines Methacrylsäureesters eines linearen C₁-C₂₂-Alkylmono-alkohols oder eines verzweigten oder cyclischen C₃-C₂₂-(Cyclo)Alkylmonoalkohols,
(c) 0,1 bis 10 Gew.-% mindestens eines Acrylsäureesters eines linearen C₁-C₂₂-Alkylmonoalkohols oder eines verzweigten oder cyclischen C₃-C₂₂-(Cyclo)Alkylmonoalkohols und
(d) gegebenenfalls 0,1 bis 30 Gew.-% mindestens eines weiteren Monomers mit mindestens einer ethylenisch ungesättigten Gruppe, das von jedem der Monomere (a), (b) und (c) verschieden ist,
zu dem Copolymer copolymerisiert werden, wobei sich die Summe der für die Herstellung des Copolymers verwendeten Monomere (a), (b) und (c) sowie gegebenenfalls (d) zu 100 Gew.-% summiert.

10. Zusammensetzung, umfassend mindestens ein Copolymer nach einem der Ansprüche 1 bis 8, wobei die Zusammensetzung mindestens ein Copolymer in einer Additivmenge enthält.

11. Zusammensetzung nach Anspruch 10, **dadurch gekennzeichnet, dass** die Zusammensetzung das mindestens eine Copolymer in einer Menge von 0,1 bis 20 Gew.-%, bezogen auf das Gesamtgewicht der Zusammensetzung, enthält.

12. Zusammensetzung nach Anspruch 10 oder 11, **dadurch gekennzeichnet, dass** es sich bei der Zusammensetzung um eine Beschichtungszusammensetzung, einen Thermoplast oder eine Formmasse handelt.

13. Verwendung eines Copolymers nach einem der Ansprüche 1 bis 8 als Additiv in Zusammensetzungen nach einem der Ansprüche 10 bis 12.

14. Verwendung nach Anspruch 13, **dadurch gekennzeichnet, dass** das Copolymer als ein Additiv aus der Gruppe bestehend aus Schmiermitteln, Slipadditiven, schmutzabweisenden Mitteln, Additiven zur Erhöhung der Hydrophobie einer Oberfläche, Additiven zur Verbesserung der Kratzfestigkeit, Antihaftmitteln, Antiblockmitteln und Gleitmitteln verwendet wird.

## Revendications

1. Copolymère (méth)acrylique ayant un poids moléculaire moyen en poids dans la plage de 2 000 à 200 000 et comprenant un squelette et des chaînes latérales contenant du polysiloxane liées audit squelette,
dans lequel les parties de polysiloxane des chaînes latérales contenant du polysiloxane liées au squelette représentent de > 25,0 à 75,0 % en poids, sur la base du poids total du copolymère et
les chaînes latérales contenant du polysiloxane liées au squelette du copolymère, indépendamment les unes des autres, sont représentées par la structure partielle (P) 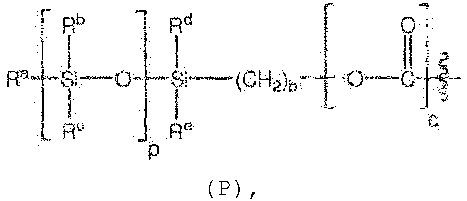 dans laquelle
le symbole 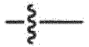 désigne une liaison covalente de la structure partielle (P) au squelette du copolymère de l'invention,
le paramètre p est dans la plage de 1 à 200,
le paramètre b est dans la plage de 2 à 30,
le paramètre c est 0 ou 1,
R^{a}, R^{b}, R^{c}, R^{d} et R^{e}, indépendamment les uns des autres, représentent un groupe alkyle halogéné ou non halogéné, saturé, linéaire avec 1 à 30 atomes de carbone, un groupe alkyle halogéné ou non halogéné, saturé, ramifié avec 3 à 30 atomes de carbone, un groupe aryle avec 6 à 30 atomes de carbone, un groupe alkylaryle ou un groupe arylalkyle, dans chaque cas avec 7 à 30 atomes de carbone, ou un résidu alcoxy(oxyde d'alkylène) ou un résidu poly(alcoxy(oxyde d'alkylène)).

2. Copolymère selon la revendication 1, **caractérisé en ce que** les parties de polysiloxane des chaînes latérales contenant du polysiloxane liées au squelette représentent de 27,5 à 75,0 % en poids, sur la base du poids total du copolymère.

3. Copolymère selon la revendication 1 ou 2, **caractérisé en ce que** le copolymère (méth)acrylique a un poids moléculaire moyen en poids dans la plage de 3 000 à 100 000.

4. Copolymère selon l'une quelconque des revendications précédentes, **caractérisé en ce qu'**il peut être obtenu par copolymérisation de monomères (a), (b) et (c) ainsi que facultativement (d), à savoir
(a) 25 à 85 % en poids d'au moins un macromonomère contenant du polysiloxane, qui contient précisément un groupe éthyléniquement insaturé,
(b) 5 à 70 % en poids d'au moins un ester méthacrylique d'un monoalcool d'alkyle en C₁-C₂₂ linéaire ou d'un monoalcool de (cyclo)alkyle en C₃-C₂₂ ramifié ou cyclique,
(c) 0,1 à 10 % en poids d'au moins un ester acrylique d'un monoalcool d'alkyle en C₁-C₂₂ linéaire ou d'un monoalcool de (cyclo)alkyle en C₃-C₂₂ ramifié ou cyclique, et
(d) facultativement 0,1 à 30 % en poids d'au moins un monomère supplémentaire ayant au moins un groupe éthyléniquement insaturé, qui est différent de chacun de monomères (a), (b) et (c),
dans lequel la somme des monomères (a), (b) et (c) ainsi que facultativement (d) utilisés pour la préparation du copolymère est de 100 % en poids.

5. Copolymère selon la revendication 4, **caractérisé en ce qu'**au moins l'un des monomères suivants (d-i), (d-ii) et (d-iii) en tant que monomère(s) (d) est/sont utilisé(s) pour la préparation du copolymère, à savoir
(d-i) au moins un ester (méth)acrylique d'un monoalcool d'alkyle en C₁-C₂₂ linéaire ou d'un monoalcool de (cyclo)alkyle en C₃-C₂₂ ramifié ou cyclique, ledit ester (méth)acrylique étant différent de chacun des monomères (b) et (c), dans lequel les fragments (cyclo)alkyle de ces esters (méth)acryliques peuvent être monosubstitués par OH et/ou COOH,
(d-ii) au moins un monomère ayant au moins deux groupe éthyléniquement insaturés, et/ou
(d-iii) au moins un composé de formule (II),
H₃C-CR^{a}R^{c}-CH₂-CR^{b}=CH₂ (II),
dans lequel R^{a} et R^{b}, indépendamment l'un de l'autre, représentent un aryle avec 6 à 30 atomes de carbone, CN ou COOR¹,
dans lequel R¹ représente H, un alkyle avec 1 à 30 atomes de carbone, un aryle avec 6 à 30 atomes de carbone, un alkylaryle ou un arylalkyle, dans chaque cas avec 7 à 30 atomes de carbone et
dans lequel R^{c} représente un alkyle avec 1 à 30 atomes de carbone, un aryle avec 6 à 30 atomes de carbone, un alkylaryle ou un arylalkyle, dans chaque cas avec 7 à 30 atomes de carbone.

6. Copolymère selon l'une quelconque des revendications précédentes, **caractérisé en ce qu'**il peut être obtenu par copolymérisation de monomères (a), (b) et (c) ainsi que facultativement (d), à savoir
(a) 30 à 85 % en poids d'au moins un macromonomère contenant du polysiloxane, qui contient précisément un groupe éthyléniquement insaturé,
(b) 10 à 50 % en poids d'au moins un ester méthacrylique d'un monoalcool d'alkyle en C₁-C₂₂ linéaire ou d'un monoalcool de (cyclo)alkyle en C₃-C₂₂ ramifié ou cyclique,
(c) 0,1 à 10 % en poids d'au moins un ester acrylique d'un monoalcool d'alkyle en C₁-C₂₂ linéaire ou d'un monoalcool de (cyclo)alkyle en C₃-C₂₂ ramifié ou cyclique,
(d-ii) 0,1 à 10 % en poids d'au moins un monomère ayant au moins deux groupes (méth)acryliques, et
(d-iii) 0,1 à 10 % en poids d'au moins un composé de formule (II),
H₃C-CR^{a}R^{c}-CH₂-CR^{b}=CH₂ (II),
dans lequel R^{a} et R^{b}, indépendamment l'un de l'autre, représentent un aryle avec 6 à 30 atomes de carbone ou COOR¹,
dans lequel R¹ représente H, un alkyle avec 1 à 30 atomes de carbone, un aryle avec 6 à 30 atomes de carbone, un alkylaryle ou un arylalkyle, dans chaque cas avec 7 à 30 atomes de carbone et
dans lequel R^{c} représente un alkyle avec 1 à 30 atomes de carbone, un aryle avec 6 à 30 atomes de carbone, un alkylaryle ou un arylalkyle, dans chaque cas avec 7 à 30 atomes de carbone,
dans lequel la somme des monomères (a), (b) et (c) ainsi que des monomères (d-ii) et (d-iii) utilisés pour la préparation du copolymère est de 100 % en poids.

7. Copolymère selon l'une quelconque des revendications précédentes, **caractérisé en ce qu'**au moins un macromonomère contenant du polysiloxane (a) de formule (I) est utilisé pour sa préparation, 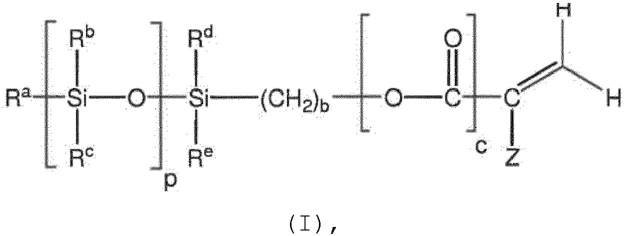 dans lequel
Z désigne H ou alkyle en C₁₋₄,
le paramètre p est dans la plage de 1 à 200,
le paramètre b est dans la plage de 2 à 30,
le paramètre c est 0 ou 1,
R^{a}, R^{b}, R^{c}, R^{d} et R^{e}, indépendamment les uns des autres, représentent un groupe alkyle halogéné ou non halogéné, saturé, linéaire avec 1 à 30 atomes de carbone, un groupe alkyle halogéné ou non halogéné, saturé, ramifié avec 3 à 30 atomes de carbone, un groupe aryle avec 6 à 30 atomes de carbone, un groupe alkylaryle ou groupe arylalkyle, dans chaque cas avec 7 à 30 atomes de carbone, ou un résidu alcoxy(oxyde d'alkylène) ou un résidu poly(alcoxy(oxyde d'alkylène)).

8. Copolymère selon la revendication 7, **caractérisé en ce que**
Z désigne H ou alkyle en C₁₋₄,
le paramètre p est dans la plage de 1 à 200,
le paramètre b est dans la plage de 2 à 10,
le paramètre c est 1,
R^{a} représente un groupe alkyle halogéné ou non halogéné, saturé, linéaire avec 1 à 30 atomes de carbone, un groupe alkyle halogéné ou non halogéné, saturé, ramifié avec 3 à 30 atomes de carbone, un groupe aryle avec 6 à 30 atomes de carbone, un groupe alkylaryle ou groupe arylalkyle, dans chaque cas avec 7 à 30 atomes de carbone, ou un résidu alcoxy(oxyde d'alkylène) ou un résidu poly(alcoxy (oxyde d'alkylène)) - (CH₂)₃-O-[(CH₂)₂₋₃-O]ᵥ-CH₃, dans lequel v est 1 à 10,
R^{b}, R^{c}, R^{d} et R^{e}, indépendamment les uns des autres, représentent un groupe alkyle halogéné ou non halogéné, saturé, linéaire avec 1 à 30 atomes de carbone, un groupe alkyle halogéné ou non halogéné, saturé, ramifié avec 3 à 30 atomes de carbone, un groupe aryle avec 6 à 30 atomes de carbone, un groupe alkylaryle ou groupe arylalkyle, dans chaque cas avec 7 à 30 atomes de carbone.

9. Procédé de préparation du copolymère selon l'une quelconque des revendications précédentes, **caractérisé en ce que** ledit procédé met en oeuvre une étape, dans laquelle
(a) 25 à 85 % en poids d'au moins un macromonomère contenant du polysiloxane, qui contient précisément un groupe éthyléniquement insaturé,
(b) 5 à 70 % en poids d'au moins un ester méthacrylique d'un monoalcool d'alkyle en C₁-C₂₂ linéaire ou d'un monoalcool de (cyclo)alkyle en C₃-C₂₂ ramifié ou cyclique,
(c) 0,1 à 10 % en poids d'au moins un ester acrylique d'un monoalcool d'alkyle en C₁-C₂₂ linéaire ou d'un monoalcool de (cyclo)alkyle en C₃-C₂₂ ramifié ou cyclique,
et
(d) facultativement 0,1 à 30 % en poids d'au moins un monomère supplémentaire ayant au moins un groupe éthyléniquement insaturé, qui est différent de chacun de monomères (a), (b) et (c),
sont copolymérisés pour former le copolymère, dans lequel la somme des monomères (a), (b) et (c) ainsi que facultativement (d) utilisés pour la préparation du copolymère est de 100 % en poids.

10. Composition comprenant au moins un copolymère selon l'une quelconque des revendications 1 à 8, la composition contenant ledit au moins un copolymère en une quantité additive.

11. Composition selon la revendication 10, **caractérisée en ce que** la composition contient l'au moins un copolymère en une quantité de 0,1 à 20 % en poids, sur la base du poids total de la composition.

12. Composition selon la revendication 10 ou 11, **caractérisée en ce que** la composition est une composition de revêtement, un thermoplastique ou un composé de moulage.

13. Utilisation d'un copolymère selon l'une quelconque des revendications 1 à 8 en tant qu'additif dans des compositions selon l'une quelconque des revendications 10 à 12.

14. Utilisation selon la revendication 13, **caractérisée en ce que** le copolymère est utilisé en tant qu'additif choisi dans le groupe constitué de lubrifiants, agents glissants, agents antisalissures, additifs pour augmenter l'hydrophobicité d'une surface, additifs pour améliorer la résistance aux rayures, agents antiadhésifs, agents antidérapants et agents antifriction.
